(19) Europäisches Patentamt
European Patent Office
Office européen des brevets

(11) **EP 2 891 914 B1**

(12) **EUROPEAN PATENT SPECIFICATION**

(45) Date of publication and mention of the grant of the patent:
**21.04.2021 Bulletin 2021/16**

(51) Int Cl.:
***G02B 15/20*** (2006.01)      ***G02B 13/18*** (2006.01)
***G03B 5/00*** (2021.01)

(21) Application number: **13833844.7**

(22) Date of filing: **28.08.2013**

(86) International application number:
**PCT/JP2013/073020**

(87) International publication number:
**WO 2014/034728 (06.03.2014 Gazette 2014/10)**

(54) **VARIABLE-MAGNIFICATION OPTICAL SYSTEM, OPTICAL DEVICE HAVING SAME VARIABLE-MAGNIFICATION OPTICAL SYSTEM, AND METHOD FOR MANUFACTURING VARIABLE-MAGNIFICATION OPTICAL SYSTEM**

OPTISCHES SYSTEM MIT VARIABLER VERGRÖSSERUNG, OPTISCHE VORRICHTUNG MIT DEM OPTISCHEN SYSTEM MIT VARIABLER VERGRÖSSERUNG UND VERFAHREN ZUR HERSTELLUNG EINES OPTISCHEN SYSTEMS MIT VARIABLER VERGRÖSSERUNG

SYSTÈME OPTIQUE À GROSSISSEMENT VARIABLE, DISPOSITIF OPTIQUE COMPORTANT CE SYSTÈME OPTIQUE À GROSSISSEMENT VARIABLE, ET PROCÉDÉ DE FABRICATION D'UN SYSTÈME OPTIQUE À GROSSISSEMENT VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2012   JP 2012189692**
**30.08.2012   JP 2012189693**
**30.08.2012   JP 2012189694**

(43) Date of publication of application:
**08.07.2015   Bulletin 2015/28**

(73) Proprietor: **Nikon Corporation**
**Tokyo 108-6290 (JP)**

(72) Inventors:
• **UEHARA, Takeru**
**Chiyoda-ku, Tokyo 100-8331 (JP)**

• **SUZUKI, Takeshi**
**Chiyoda-ku, Tokyo 100-8331 (JP)**

(74) Representative: **Whitlock, Holly Elizabeth Ann et al**
**Maucher Jenkins**
**26 Caxton Street**
**London SW1H 0RJ (GB)**

(56) References cited:
JP-A- 2007 256 695       JP-A- 2008 046 612
JP-A- 2009 048 012       JP-A- 2009 169 051
JP-A- 2010 152 147       JP-A- 2012 133 228
JP-A- 2012 133 229       JP-A- 2012 133 230
JP-A- 2012 141 600       JP-A- 2012 141 600
US-A1- 2007 223 105      US-A1- 2012 162 777
US-A1- 2012 162 779

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a variable magnification optical system, an optical device having this variable magnification optical system, and a method for manufacturing the variable magnification optical system.

Background Art

Conventionally, there has been proposed a variable magnification optical system suitable for a photographing camera, an electronic still camera, a video camera or the like, for example, in Japanese Patent Application Laid-Open No. Hei 11-174329. Further prior art can be found in JP 2012 141600 A, US 2012/162779 A1, US 2012/162777 A1 and US 2007/223105 A1.

SUMMARY OF THE INVENTION

Problems to be solved by the Invention

However, in the conventional variable magnification optical system, there was a problem that variation in aberrations upon zooming was large, and any measures against variation in aberrations caused upon correcting a camera shake have not been well taken.

The present invention is made in view of the above-described problem, and has an object to provide a variable magnification optical system in which variation in aberrations upon conducting correction of a camera shake is small and effective measures are taken against variation in aberrations caused upon correcting a camera shake, an optical apparatus having this variable magnification optical system, and a method for manufacturing the variable magnification optical system.

Means for solving the Problem

In order to solve the above-mentioned problem, according to a first aspect of the present invention, there is provided a variable magnification optical system as defined in claim 1 comprising, in order from an object side: a first lens group having negative refractive power; a second lens group having positive refractive power; a third lens group having negative refractive power; and a fourth lens group having positive refractive power;
upon zooming from a wide-angle end state to a telephoto end state, a distance between the first lens group and the second lens group being varied, a distance between the second lens group and the third lens group being varied and a distance between the third lens group and the fourth lens group being varied;
at least one single lens of the second lens group being a vibration reduction lens group that is moved so as to have a component in a direction perpendicular to the optical axis; and
the following conditional expression being satisfied:

$$0.35 < D3w/(-f3) < 0.45$$

where D3w denotes a distance between the third lens group and the fourth lens group in the wide-angle end state, and f3 denotes a focal length of the third lens group.

Further, according to a second aspect of the present invention, there is provided an optical apparatus having the variable magnification optical system according to the first aspect of the present invention.

EFFECT OF THE INVENTION

According to the present invention so configured as above described, there are provided a variable magnification optical system which can suppress variation in aberrations upon zooming and having optical performance which has taken measures against variation in aberrations upon correcting a camera shake, an optical apparatus having the variable magnification optical system, and a method for manufacturing the variable magnification optical system.

Brief Description of the Drawings

Fig.1 is a sectional view showing a variable magnification optical system according to a first example that is common to a first to third embodiments of the present application.

Figs.2A and 2B are graphs showing various aberrations of the variable magnification optical system according to the first example of the present application in a wide-angle end state, in which Fig.2A shows aberrations upon focusing on infinity, and Fig.2B shows coma at the time when a correction of a camera shake is conducted upon focusing on infinity.

Fig.3 is graphs showing various aberrations of the variable magnification optical system according to the first example of the present application in an intermediate focal length state upon focusing on infinity.

Figs.4A and 4B are graphs showing various aberrations of the variable magnification optical system according to the first example of the present application in a telephoto end state, in which Fig.4A shows aberrations upon focusing on infinity, and Fig.4B shows coma at the time when a correction of a camera shake is conducted upon focusing on infinity.

Fig.5 is a sectional view showing a variable magnification optical system according to a second example that is common to the first to third embodiments of the present application.

Figs.6A and 6B are graphs showing various aberrations of the variable magnification optical system according to the second example of the present application in a wide-angle end state, in which Fig.6A shows aberrations upon focusing on infinity, and Fig.6B shows coma at the time when a correction of a camera shake is conducted upon focusing on infinity.

Fig.7 is graphs showing various aberrations of the variable magnification optical system according to the second example of the present application in an intermediate focal length state upon focusing on infinity.

Figs.8A and 8B are graphs showing various aberrations of the variable magnification optical system according to the second example of the present application in a telephoto end state, in which Fig.8A shows aberrations upon focusing on infinity, and Fig.8B shows coma at the time when a correction of a camera shake is conducted upon focusing on infinity.

Fig.9 is a sectional view showing a variable magnification optical system according to the third example that is common to the first to third embodiments of the present application.

Figs.10A and 10B are graphs showing various aberrations of the variable magnification optical system according to the third example of the present application in a wide-angle end state, in which Fig.10A shows aberrations upon focusing on infinity, and Fig.10B shows coma at the time when a correction of a camera shake is conducted upon focusing on infinity.

Fig.11 is graphs showing various aberrations of the variable magnification optical system according to the third example of the present application in an intermediate focal length state upon focusing on infinity.

Figs.12A and 12B are graphs showing various aberrations of the variable magnification optical system according to the third example of the present application in a telephoto end state, in which Fig.12A shows aberrations upon focusing on infinity, and Fig.12B shows coma at the time when a correction of a camera shake is conducted upon focusing on infinity.

Fig.13 is a sectional view showing a variable magnification optical system according to a fourth example that is common to the first to third embodiments of the present application.

Figs.14A and 14B are graphs showing various aberrations of the variable magnification optical system according to the fourth example of the present application in a wide-angle end state, in which Fig.14A shows aberrations upon focusing on infinity, and Fig.14B shows coma at the time when a correction of a camera shake is conducted upon focusing on infinity.

Fig.15 is graphs showing various aberrations of the variable magnification optical system according to the fourth example of the present application in an intermediate focal length state upon focusing on infinity.

Figs.16A and 16B are graphs showing various aberrations of the variable magnification optical system according to the fourth example of the present application in a telephoto end state, in which Fig.16A shows aberrations upon focusing on infinity, and Fig.16B shows coma at the time when a correction of a camera shake is conducted upon focusing on infinity.

Fig.17 is a cross-sectional view showing a camera equipped with the variable magnification optical system according to the first to third embodiments of the present application.

Fig.18 is a flowchart schematically showing a method for manufacturing the variable magnification optical system according to the first embodiment of the present application.

Fig.19 is a flowchart schematically showing a method for manufacturing the variable magnification optical system according to the second embodiment of the present application.

Fig.20 is a flowchart schematically showing a method for manufacturing the variable magnification optical system according to the third embodiment of the present application.

Embodiment for Carrying out the Invention

(First Embodiment)

The preferred first embodiment of the present invention is explained below with referring to the drawings.

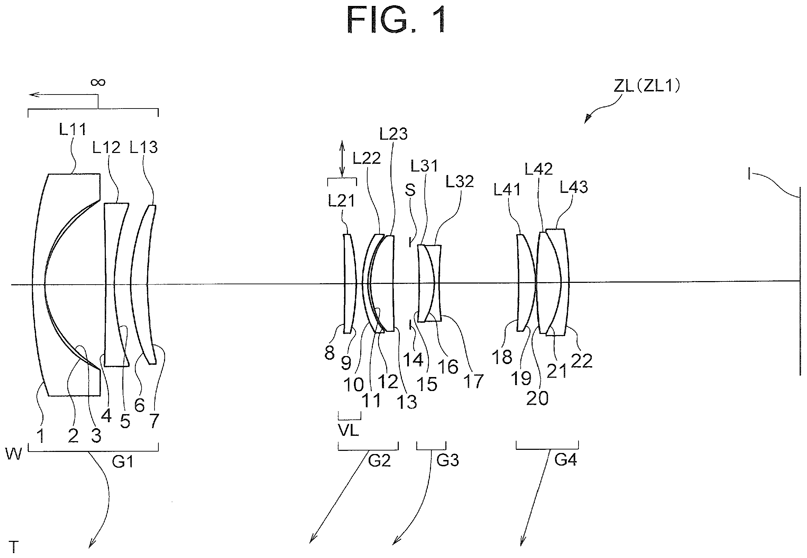

As shown in Fig.1, a variable magnification optical system ZL according to the present first embodiment is composed of, in order from an object side: a first lens group G1 having negative refractive power; a second lens group G2 having positive refractive power; a third lens group G3 having negative refractive power; and a fourth lens group G4 having positive refractive power. In this variable magnification optical system ZL, upon zooming from a wide-angle end state to a telephoto end state, a distance between the first lens group G1 and the second lens group G2 is varied, a distance between the second lens group G2 and the third lens group G3 is varied and a distance between the third lens group G3 and the fourth lens group G4 is varied. Further, in this variable magnification optical system ZL, at least one single lens of the second lens group G2 (for example, a positive meniscus lens L21 in Fig.1) is a vibration reduction lens group VL that is moved so as to have a component in a direction perpendicular to the optical axis. The variable magnification optical system ZL according to the first embodiment thus configured, can correct effectively coma at the telephoto end state and curvature of field at the wide-angle end state upon zooming, and it is possible to secure a predetermined amount of image plane movement in the direction substantially perpendicular to the optical axis.

Next, a condition for configuring such variable magnification optical system ZL will be explained. Firstly, it is preferable that the variable magnification optical system ZL satisfies the following conditional expression (1):

$$0.35 < D3w/(-f3) < 0.45 \qquad (1)$$

where D3w denotes a distance between the third lens group G3 and the fourth lens group G4 in the wide-angle end state, and f3 denotes a focal length of the third lens group G3.

The conditional expression (1) is a conditional expression for defining a distance between the third lens group G3 and the fourth lens group G4 to the focal length of the third lens group G3. When the value of D3w/(-f3) is equal to or exceeds the upper limit value of the conditional expression (1), a distance D3w between the third lens group G3 and the fourth lens group G4 at the wide-angle end state becomes large and the focal length f3 of the third lens group G3 becomes small, so that it becomes difficult to correct spherical aberration at the wide-angle end state. This is not preferable. Incidentally, in order to attain the effect of the present application surely, it is preferable to set the upper limit value of the conditional expression (1) to 0.42. On the other hand, when the value of D3w/(-f3) is equal to or falls below the lower limit value of the conditional expression (1), a distance D3w between the third lens group G3 and the fourth lens group G4 at the wide-angle end state becomes small and the focal length f3 of the third lens group G3 becomes large, so that it becomes difficult to correct curvature of field at the wide-angle end state. This is not preferable. Incidentally, in order to attain the effect of the present application surely, it is preferable to set the lower limit value of the conditional expression (1) to 0.38.

Further, in the variable magnification optical system ZL, it is preferable that the first lens group G1 has a first negative lens (for example, an aspherical negative lens L11 in Fig.1) at the most object side and a positive lens (for example, a positive meniscus lens L13 in Fig.1) at the most image side, and satisfies the following conditional expression (2):

$$2.10 < f1gr/(-f1gf) < 3.00 \qquad (2)$$

where f1gf denotes a focal length of the first negative lens, and f1gr denotes a focal length of the positive lens.

The conditional expression (2) defines properly, the focal length f1gf of the first negative lens disposed at the most object side and the focal length f1gr of the positive lens disposed at the most image side to the focal length of the first lens group G1. When the value of f1gr/(-f1gf) is equal to or exceeds the upper limit value of the conditional expression (2), the focal length f1gf of the first negative lens becomes small and the focal length f1gr of the positive lens becomes large, so it becomes difficult to correct coma at the wide-angle end state. This is not preferable. Incidentally, in order to attain the effect of the present application surely, it is preferable to set the upper limit value of the conditional expression (2) to 2.44. On the other hand, when the value of f1gr/(-f1gf) is equal to or falls below the lower limit value of the conditional expression (2), the focal length f1gf of the first negative lens becomes large and the focal length f1gr of the positive lens becomes small, so it becomes difficult to correct spherical aberration at the telephoto end state. This is not preferable. Incidentally, in order to attain the effect of the present application surely, it is preferable to set the lower limit value of the conditional expression (2) to 2.14.

It is noted that, with providing at least one negative lens (for example, a double concave lens L12 in Fig.1) between the first negative lens and the positive lens, it is possible to correct excellently curvature of field in the neighborhood of the wide-angle end without making diameter of the most front lens large. Moreover, this effect can be attained more by taking a configuration that the first lens group G1 is composed of three lenses of a first negative lens, a second negative lens and a positive lens.

Further, in the variable magnification optical system ZL, it is preferable that the following conditional expression (3) is satisfied:

$$0.81 < f2/(-f3) < 1.00 \qquad (3)$$

where f2 denotes a focal length of the second lens group G2, and f3 denotes a focal length of the third lens group G3.

The conditional expression (3) defines a proper focal length of the third lens group G3 to a focal length of the second lens group G2. When the value of f2/(-f3) is equal to or exceeds the upper limit value of the conditional expression (3), the focal length of the third lens group G3 becomes small and the focal length of the second lens group G2 becomes large, so it becomes difficult to correct curvature of field at the telephoto end state. This is not preferable. Incidentally, in order to attain the effect of the present application surely, it is preferable to set the upper limit value of the conditional expression (3) to 0.84. On the other hand, when the value of f2/(-f3) is equal to or falls below the lower limit value of the conditional expression (3), the focal length of the third lens group G3 becomes large and the focal length of the second lens group G2 becomes small, so it becomes difficult to correct spherical aberration at the wide-angle end state. This is not preferable. Incidentally, in order to attain the effect of the present application surely, it is preferable to set the lower limit value of the conditional expression (3) to 0.82.

Further, in the variable magnification optical system ZL, it is preferable that an aperture stop S is disposed in the neighborhood of the third lens group G3. With such a configuration, it is possible to make a diameter of a fully opened aperture diaphragm constant from the wide-angle end state to the telephoto end state, thereby simplifying mechanical structure so that deterioration in optical performance caused by assembling error may be prevented.

Moreover, in the zooming optical system ZL, it is preferable to satisfy the following conditional expression (4):

$$0.60 < f2 / f4 < 0.70 \qquad (4)$$

where f2 denotes the focal length of the second lens group G2, and f4 denotes a focal length of the fourth lens group G4.

The conditional expression (4) defines a proper focal length of the fourth lens group G4 to a focal length of the second lens group G2. When the value of f2/f4 is equal to or exceeds the upper limit value of the conditional expression (4), the focal length of the fourth lens group G4 becomes small and the focal length of the second lens group G2 becomes large, so that it is difficult to correct spherical aberration at the wide-angle end state. This is not preferable. Incidentally, in order to attain the effect of the present application surely, it is preferable to set the upper limit value of the conditional expression (4) to 0.68. On the other hand, when the value of f2/f4 is equal to or falls below the lower limit value of the conditional expression (4), the focal length of the fourth lens group G4 becomes large and the focal length of the second lens group G2 becomes small, so that it becomes difficult to correct curvature of field at the telephoto end state. This is not preferable. Incidentally, in order to attain the effect of the present application surely, it is preferable to set the lower limit value of the conditional expression (4) to 0.65.

Further, in the variable magnification optical system ZL, it is preferable that the most object side lens in the first lens group G1 has an aspherical surface (for example, an image side surface of the aspherical negative lens L11 in Fig.1 (the third surface)). Accordingly, it is possible to correct curvature of field in the wide-angle end state and spherical aberration in the telephoto end state effectively.

Moreover, in the variable magnification optical system ZL, it is preferable that the third lens group G3 is composed of a cemented lens constructed by a positive lens cemented with a negative lens. Accordingly, it is possible to correct chromatic coma aberration in the wide-angle end state effectively.

Further, it is preferable that the variable magnification optical system ZL is constructed such that, upon zooming from a wide-angle end state to a telephoto end state, the distance between the second lens group G2 and the third lens group G3 increases and the distance between the third lens group G3 and the fourth lens group G4 decreases. Accordingly, it is possible to correct variation in spherical aberration and curvature of field effectively and to secure a predetermined variable magnification ratio.

Further, it is preferable to compose the variable magnification optical system ZL such that all lenses of the second lens group G2, the third lens group G3 and the fourth lens group G4 are spherical lenses. Accordingly, it is possible to facilitate lens processing and assembling adjustment, and to prevent deterioration of optical performance due to errors of lens processing and assembling adjustment.

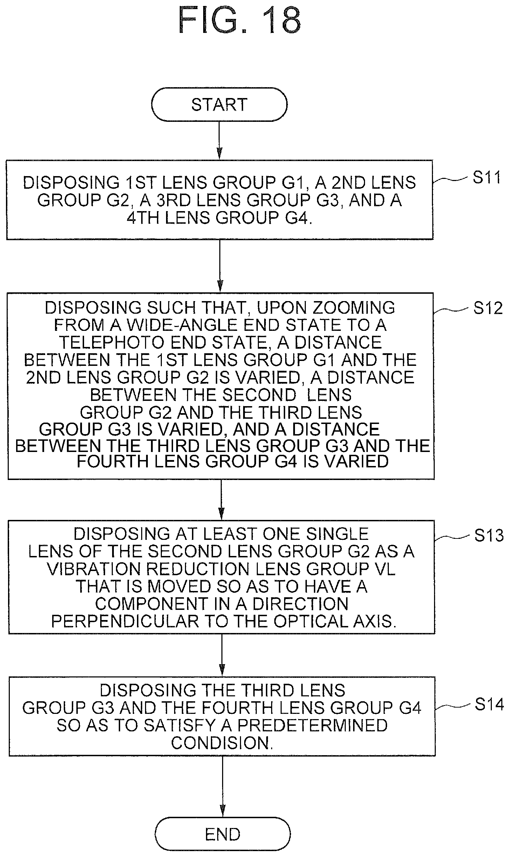

Hereinafter, a method for the variable magnification optical system ZL according to the first embodiment is schematically explained with reference to Fig.18. First, each lens is disposed so as to prepare the lens groups G1 to G4(step S11). Then, each lens is disposed such that, upon zooming from the wide-angle end state to the telephoto end state, the distance between the first lens group G1 and the second lens group G2 is varied, the distance between the second lens group G2 and the third lens group G3 is varied, and the third lens group G3 and the fourth lens group G4 is varied (step S12). Further, at least one single lens in the second lens group G2 is disposed as the vibration reduction lens group VL that is moved so as to have a component in a direction perpendicular to the optical axis (step S13). Furthermore, the third lens group G3 and the fourth lens group G4 are disposed such that the above described conditional expression (1) is satisfied (step S14).

Specifically, in the first embodiment, as shown in Fig.1, in order from the object side, a negative meniscus lens type aspherical negative lens L11 with a convex surface facing the object side, a double concave lens L12, and a positive meniscus lens L13 with a convex surface facing the object side are disposed to form the first lens group G1; in order from the object side, a positive meniscus lens L21 with a concave surface facing the object side, a negative meniscus lens L22 with a convex surface facing the object side, and a positive meniscus lens L23 with a convex surface facing the object side are disposed to form the second lens group G2; in order from the object side, a cemented lens constructed by a positive meniscus lens L31 with a concave surface facing the object side cemented with a double concave lens L32 is disposed to form the third lens group G3; and in order from the object side, a positive meniscus lens L41 with a concave surface facing the object side, and a cemented lens constructed by a double convex lens L42 cemented with a negative meniscus lens 43 with a concave surface facing the object side, are disposed to form the fourth lens group G4. Respective lens groups prepared in such a way are disposed in accordance with the above described procedure to manufacture the variable magnification optical system ZL.

(Second Embodiment)

The preferred second embodiment of the present invention is explained below with reference to the accompanying drawings.

As shown in Fig.1, a variable magnification optical system ZL according to the present second embodiment is composed of, in order from an object side: a first lens group G1 having negative refractive power; a second lens group G2 having positive refractive power; a third lens group G3 having negative refractive power; and a fourth lens group G4 having positive refractive power. In this variable magnification optical system ZL, upon zooming from a wide-angle end state to a telephoto end state, a distance between the first lens group G1 and the second lens group G2 is varied, a distance between the second lens group G2 and the third lens group G3 is varied and a distance between the third lens group G3 and the fourth lens group G4 is varied. Further, in this variable magnification optical system ZL, at least one single lens of the second lens group G2 (for example, a positive meniscus lens L21 in Fig.1) is a vibration reduction lens group VL that is moved so as to have a component in a direction perpendicular to the optical axis. In the variable magnification optical system ZL according to the second embodiment thus configured, it is possible to correct effectively coma at the telephoto end and curvature of field at the wide-angle end upon zooming, and to secure a predetermined amount of image plane movement in the direction substantially perpendicular to the optical axis.

Next, a condition for configuring such variable magnification optical system ZL is explained. First, in the variable magnification optical system ZL, the first lens group G1 comprises a first negative lens (for example, an aspherical negative lens L11 shown in Fig.1) on the most object side and a positive lens (for example, a positive meniscus lens L13 shown in Fig.1) on the most image side, and the following conditional expression (2) is preferably satisfied:

$$2.10 < f1gr / (-f1gf) < 3.00 \qquad (2)$$

where f1gf denotes a focal length of the first negative lens, and f1gr denotes a focal length of the positive lens.

The conditional expression (2) defines properly the focal length f1gf of the first negative lens disposed on the most object side and the focal length f1gr of the positive lens disposed on the most image side to a focal length of the first lens group G1. When the value of f1gr/(-f1gf) is equal to or exceeds the upper limit value of the conditional expression (2), the focal length f1gf of the first negative lens becomes small and the focal length f1gr of the positive lens becomes large, so that it becomes difficult to correct coma at the wide-angle end state. This is not preferable. Incidentally, in order to attain the effect of the present application surely, it is preferable to set the upper limit value of the conditional expression (2) to 2.44. On the other hand, when the value of f1gr/(-f1gf)is equal to or falls below the lower limit value of the conditional expression (2), the focal length f1gf of the first negative lens becomes large and the focal length f1gr of the positive lens becomes small, so it becomes difficult to correct spherical aberration at the wide-angle end state. This is not preferable. Incidentally, in order to attain the effect of the present application surely, it is preferable to set the lower limit value of the conditional expression (2) to 2.14.

With at least a single negative lens (for example, a double concave lens L12 shown in Fig.1) being provided between the first negative lens and the positive lens, diameters of front lenses do not become large, and it is possible to correct curvature of field in the neighborhood of the wide-angle end state excellently. Further, this effect can be realized more effectively by constructing the first lens group G1 with use of three lenses of a first negative lens, a second negative lens and a positive lens.

It the variable magnification optical system ZL, it is preferable to satisfy the following conditional expression (1):

$$0.35 < D3w / (-f3) < 0.45 \qquad (1)$$

where D3w denotes the distance between the third lens group G3 and the fourth lens group G4 at the wide-angle end state and f3 denotes a focal length of the third lens group G3.

The conditional expression (1) defines the distance between the third lens group G3 and the fourth lens group G4 to the focal length of the third lens group G3. When the value of D3w/(-f3) is equal to or exceeds the upper limit value of the conditional expression (1), the distance D3w between the third lens group G3 and the fourth lens group G4 becomes large at the wide-angle end state and the focal length f3 of the third lens group G3 becomes small, so that it becomes difficult to correct spherical aberration at the wide-angle end state. This is not preferable. Incidentally, in order to attain the effect of the present application surely, it is preferable to set the upper limit value of the conditional expression (1) to 0.42. On the other hand, when the value of D3w/(-f3) is equal to or falls below the lower limit value of the conditional expression (1), the distance D3w between the third lens group G3 and the fourth lens group G4 becomes small and the focal length f3 of the third lens group G3 becomes large, so that it becomes difficult to correct curvature of field at the wide-angle end state. This is not preferable. Incidentally, in order to attain the effect of the present application surely, it is preferable to set the lower limit value of the conditional expression (1) to 0.38.

Further, it is preferable that the variable magnification optical system ZL satisfies the following expression (3):

$$0.81 < f2 / (-f3) < 1.00 \qquad (3)$$

where f2 denotes a focal length of the second lens group G2, and f3 denotes a focal length of the third lens group G3.

The conditional expression (3) defines properly the focal length of the third lens group G3 to the focal length of the second lens group G2. When the value of f2/(-f3) is equal to or exceeds the upper limit value of the conditional expression (3), the focal length of the third lens group G3 becomes small and the focal length of the second lens group G2 becomes large, so that it becomes difficult to correct curvature of field at the telephoto end state. This is not preferable. Incidentally, in order to attain the effect of the present application surely, it is preferable to set the upper limit value of the conditional expression (3) to 0.84. On the other hand, when the value of f2/(-f3) is equal to or falls below the lower limit value of the conditional expression (3), the focal length of the third lens group G3 becomes large and the focal length of the second lens group G2 becomes small, so that it becomes difficult to correct spherical aberration at the wide-angle end state. This is not preferable. Incidentally, in order to attain the effect of the present application surely, it is preferable to set the lower limit value of the conditional expression (3) to 0.82.

Also, it is preferable that the variable magnification optical system ZL includes an aperture stop S in the neighborhood of the third lens group G3. With such a configuration, it is possible to prevent deterioration of optical performance due to assembling errors with making the diameter of the aperture stop from the wide-angle end state to the telephoto end state constant and simplifying a mechanical structure.

Further, in the variable magnification optical system ZL, it is preferable to satisfy the following conditional expression (4):

$$0.60 < f2 / f4 < 0.70 \qquad (4)$$

where f2 denotes the focal length of the second lens group G2, and f4 denotes a focal length of the fourth lens group G4.

The conditional expression (4) defines the proper focal length of the fourth lens group G4 to the focal length of the second lens group G2. When the value of f2/f4 is equal to or exceeds the upper limit value of the conditional expression (4), the focal length of the fourth lens group G4 becomes small and the focal length of the second lens group G2 becomes large, so that it becomes difficult to correct spherical aberration at the wide-angle end state. This is not preferable. Incidentally, in order to attain the effect of the present application surely, it is preferable to set the upper limit value of the conditional expression (4) to 0.68. On the other hand, when the value of f2/f4 is equal to or falls below the lower limit value of the conditional expression (4), the focal length of the fourth lens group G4 becomes large and the focal length of the second lens group G2 becomes small, so that it becomes difficult to correct curvature of field at the telephoto end state. This is not preferable. Incidentally, in order to attain the effect of the present application surely, it is preferable to set the lower limit value of the conditional expression (4) to 0.65.

Further, in the variable magnification optical system ZL, it is preferable that the most object side lens in the first lens group G1 has an aspherical surface (for example, an aspherical negative lens L11 shown in Fig.1(third surface)). Accordingly, it is possible to correct curvature of field at the wide-angle end state and spherical aberration at the telephoto end state effectively.

Further, in the variable magnification optical system ZL, it is preferable that the third lens group G3 is composed of a cemented lens constructed by a positive lens cemented with a negative lens. Accordingly, it is possible to correct chromatic coma aberration at the wide-angle end state effectively.

Further, it is preferable that the variable magnification optical system ZL is constructed such that, upon zooming from the wide-angle end state to the telephoto end state, the distance between the second lens group G2 and the third lens group G3 increases and the distance between the third lens group G3 and the fourth lens group G4 decreases. Accordingly, it is possible to correct variation of spherical aberration and curvature of field effectively and to secure a predetermined variable magnification ratio.

Further, in the variable magnification optical system ZL, it is preferable that all lenses of the second lens group G2, the third lens group G3 and the fourth lens group G4 are composed of spherical lenses. Accordingly, it is possible to facilitate lens processing and assembling adjustment and to prevent deterioration of optical performance due to errors of lens processing and assembling adjustment.

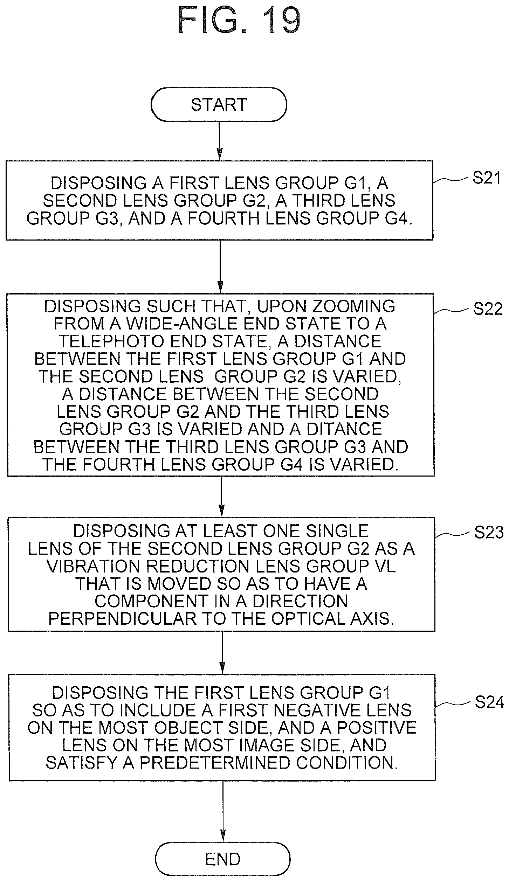

Hereinafter, a method for manufacturing the variable magnification optical system ZL according to the second embodiment is schematically explained with reference to Fig.19. First, each lens is disposed so as to prepare the lens groups G1 to G4 (step S21). Then, the lens groups G1 to G4 are disposed such that, upon zooming from the wide-angle end state to the telephoto end state, the distance between the first lens group G1 and the second lens group G2 is varied, the distance between the second lens group G2 and the third lens group G3 is varied, and the distance between the third lens group G3 and the fourth lens group G4 is varied (step S22). Further, at least one single lens in the second lens group G2 is disposed as the vibration reduction lens group VL so as to be moved to have a component in a direction perpendicular to the optical axis (step S23). Furthermore, in the first lens group G1, the first negative lens is disposed on the most object side and the positive lens is disposed on the most image side so as to satisfy the above described conditional expression (2) (step S24).

Specifically, in the second embodiment, for example, as shown in Fig.1, in order from the object side, a negative meniscus lens type aspherical negative lens L11 with a convex surface facing the object side, a double concave lens L12, and a positive meniscus lens L13 with a convex surface facing the object side are disposed to form the first lens group G1; in order from the object side, a positive meniscus lens L21 with a concave surface facing the object side, a negative meniscus lens L22 with a convex surface facing the object side, and a positive meniscus lens L23 with a convex surface facing the object side are disposed to form the second lens group G2; in order from the object side, a cemented lens constructed by a positive meniscus lens L31 with a concave surface facing the object side cemented with a double concave lens L32 are disposed to form the third lens group G3; and in order from the object side, a positive meniscus lens L41 with a concave surface facing the object side, a cemented lens constructed by a double convex lens L42 cemented with a negative meniscus lens 43 with a concave surface facing the object side are disposed to form the fourth lens group G4. In such a way, prepared respective lens groups are disposed in accordance with the above described procedure to manufacture the variable magnification optical system ZL.

(Third Embodiment)

The preferred third embodiment of the present invention is explained below with reference to the accompanying drawings. As shown in Fig.1, a variable magnification optical system ZL according to the present third embodiment is composed of, in order from an object side: a first lens group G1 having negative refractive power; a second lens group G2 having positive refractive power; a third lens group G3 having negative refractive power; and a fourth lens group G4 having positive refractive power. In this variable magnification optical system ZL, upon zooming from a wide-angle end state to a telephoto end state, a distance between the first lens group G1 and the second lens group G2 is varied, a distance between the second lens group G2 and the third lens group G3 is varied and a distance between the third lens group G3 and the fourth lens group G4 is varied. Further, in this variable magnification optical system ZL, at least one single lens (for example, a positive meniscus lens L21 shown in Fig.1) of the second lens group G2 (for example, a positive meniscus lens L21 in Fig.1) is a vibration reduction lens VL that is moved so as to have a component in a direction perpendicular to the optical axis. In the variable magnification optical system ZL according to the third embodiment thus configured, it is possible to correct effectively coma at the telephoto end state and curvature of field at the wide-angle end state upon zooming, and to secure a predetermined amount of an image plane movement in a direction substantially perpendicular to the optical axis.

Next, a condition for configuring such variable magnification optical system ZL is explained. First, in the variable magnification optical system ZL, the following conditional expression (3) is preferably satisfied:

$$0.81 < f2 / (-f3) < 1.00 \qquad (3)$$

where f2 denotes a focal length of the second lens group G2, and f3 denotes a focal length of the third lens group G3.

The conditional expression (3) defines properly, the focal length of the third lens group G3 to the focal length of the second lens group G2. When the value of f2/(-f3) is equal to or exceeds the upper limit value of the conditional expression (3), the focal length of the third lens group G3 becomes small and the focal length of the second lens group G2 becomes large, so that it becomes difficult to correct curvature of field at the telephoto end state. This is not preferable. Incidentally, in order to attain the effect of the present application surely, it is preferable to set the upper limit value of the conditional expression (3) to 0.84. On the other hand, when the value of f2/(-f3) is equal to or falls below the lower limit value of the conditional expression (3), the focal length of the third lens group G3 becomes large and the focal length of the second lens group G2 becomes small, so that it becomes difficult to correct spherical aberration at the wide-angle end state. This is not preferable. Incidentally, in order to attain the effect of the present application surely, it is preferable to set the lower limit value of the conditional expression (3) to 0.82.

Further, in the variable magnification optical system ZL, it is preferable that an aperture stop S is disposed in the neighborhood of the third lens group G3. With such a configuration, it is possible to make a diameter of the aperture stop from the wide-angle end state to the telephoto end state constant and to simplify a mechanical structure, so that it is possible to prevent deterioration of optical performance due to assembling errors.

Further, in the variable magnification optical system ZL, it is preferable that the first lens group G1 has a first negative lens (for example, an aspherical type negative lens L11 shown in Fig.1) on the most object side and a positive lens (for example, a positive meniscus lens L13 shown in Fig.1) on the most image side, and satisfy the following conditional expression (2):

$$2.10 < f1gr / (-f1gf) < 3.00 \qquad (2)$$

where f1gf denotes a focal length of the first negative lens, and f1gr denotes a focal length of the positive lens.

The conditional expression (2) defines properly, the focal length f1gf of the first negative lens disposed on the most object side and the focal length f1gr of the positive lens disposed on the most image side to a focal length of the first lens group G1. When the value of f1gr/(-f1gf) is equal to or exceeds the upper limit value of the conditional expression (2), the focal length f1gf of the first negative lens becomes small and the focal length f1gr of the positive lens becomes large, so that it becomes difficult to correct coma at the wide-angle end state. This is not preferable. Incidentally, in order to attain the effect of the present application surely, it is preferable to set the upper limit value of the conditional expression (2) to 2.44. On the other hand, when the value of f1gr/(-f1gf) is equal to or falls below the lower limit value of the conditional expression (2), the focal length f1gf of the first negative lens becomes large and the focal length f1gr of the positive lens becomes small, so that it becomes difficult to correct spherical aberration at the telephoto end state. This is not preferable. Incidentally, in order to attain the effect of the present application surely, it is preferable to set the lower limit value of the conditional expression (2) to 2.14.

With at least a single negative lens (for example, a double concave lens L12 shown in Fig.1) being provided between the first negative lens and the positive lens, diameters of front lenses do not become large, and it is possible to correct curvature of field in the neighborhood of the wide-angle end superbly. Further, this effect can be realized more excellently by constructing the first lens group G1 by use with three lenses of the first negative lens, a second negative lens and the positive lens.

Further, in the variable magnification optical system ZL, it is preferable to satisfy the following conditional expression (1):

$$0.35 < D3w / (-f3) < 0.45 \qquad (1)$$

where D3w denotes a distance between the third lens group G3 and the fourth lens group G4 at the wide-angle end state, and f3 denotes a focal length of the third lens group G3.

The conditional expression (1) defines the distance between the third lens group G3 and the fourth lens group G4 to the focal length of the third lens group G3. When the value of D3w/(-f3) is equal to or exceeds the upper limit value of the conditional expression (1), the distance D3w between the third lens group G3 and the fourth lens group G4 at the wide-angle end state becomes large, and the focal length f3 of the third lens group G3 becomes small, so that it becomes difficult to correct spherical aberration at the wide-angle end state. This is not preferable. Incidentally, in order to attain the effect of the present application surely, it is preferable to set the upper limit value of the conditional expression (1) to 0.42. On the other hand, when the value of D3w/(-f3) is equal to or falls below the lower limit value of the conditional expression (1), the distance D3w between the third lens group G3 and the fourth lens group G4 at the wide-angle end state becomes small and the focal length f3 of the third lens group G3 becomes large, so that it becomes difficult to correct curvature of field at the wide-angle end state. This is not preferable. Incidentally, in order to attain the effect of the present application surely, it is preferable to set the lower limit value of the conditional expression (1) to 0.38.

Further, in the variable magnification optical system ZL, it is preferable to satisfy the following conditional expression (4):

$$0.60 < f2 / f4 < 0.70 \qquad (4)$$

where f2 denotes a focal length of the second lens group G2, and f4 denotes a focal length of the fourth lens group G4.

The conditional expression (4) defines properly, the focal length of the fourth lens group G4 to the focal length of the second lens group G2. When the value of f2/f4 is equal to or exceeds the upper limit value of the conditional expression (4), the focal length of the fourth lens group G4 becomes small and the focal length of the second lens group G2 becomes large, so that it becomes difficult to correct spherical aberration at the wide-angle end state. This is not preferable. In order to attain the effect of the present application surely, it is preferable to set the upper limit value of the conditional expression (4) to 0.68. On the other hand, when the value of f2/f4 is equal to or falls below the lower limit value of the conditional expression (4), the focal length of the fourth lens group G4 becomes large and the focal length of the second lens group G2 becomes small, so that it becomes difficult to correct curvature of field at the telephoto end state. This is not preferable. Incidentally, in order to attain the effect of the present application surely, it is preferable to set the lower limit value of the conditional expression (4) to 0.65.

In the variable magnification optical system ZL, it is preferable that, in the first lens group G1, the most object side lens has an aspherical surface (for example, the image side surface (third surface) of the aspherical negative lens L11 shown in Fig.1). Accordingly, it is possible to correct curvature of field at the wide-angle end state and spherical aberration at the telephoto end state.

Further, in the variable magnification optical system ZL, it is preferable that the third lens group G3 is constructed by a cemented lens constructed by a positive lens cemented with a negative lens. Accordingly, it is possible to correct chromatic coma aberration at the wide-angle end state effectively.

Further, it is preferable that the variable magnification optical system ZL is constructed such that, upon zooming from the wide-angle end state to the telephoto end state, the distance between the second lens group G2 and the third lens group G3 increases, and the distance between the third lens group G3 and the fourth lens group G4 decreases. Accordingly, it is possible to correct variation of spherical aberration and curvature of field effectively and to secure a predetermined variable magnification ratio.

Further, in the variable magnification optical system ZL, it is preferable to construct such that all lenses of the second lens group G2, the third lens group G3, and the fourth lens group G4 are spherical lenses. Accordingly, it is possible to facilitate lens processing and assembling adjustment, and to prevent deterioration of optical performance due to errors of lens processing and assembling adjustment.

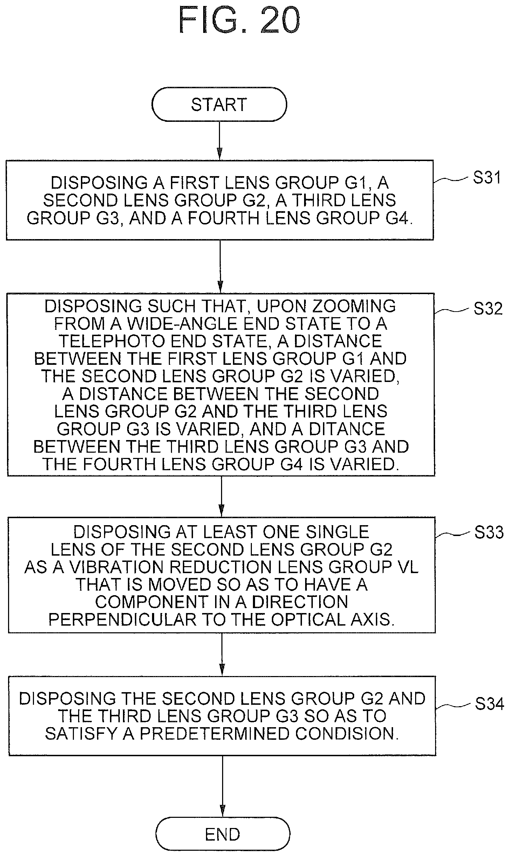

Hereinafter, a method for manufacturing the variable magnification optical system ZL according to the third embodiment is schematically explained with reference to Fig.20. First, each lens is disposed so as to prepare the lens groups G1 to G4 (step S31). Then, each lens group is disposed such that, upon zooming from the wide-angle end state to the telephoto end state, the distance between the first lens group G1 and the second lens group G2 is varied, the distance between the second lens group G2 and the third lens group G3 is varied, and the distance between the third lens group G3 and the fourth lens group G4 is varied (step S32). Further, at least one single lens in the second lens group G2 is disposed as a vibration reduction lens group VL so as to be moved to have a component in a direction perpendicular to the optical axis (step S33). Furthermore, the second lens group G2 and the third lens group G3 are disposed so as to satisfy the above described conditional expression (3) (step S34).

Specifically, in the third embodiment, for example, as shown in Fig.1, in order from the object side, a negative meniscus lens type aspherical negative lens L11 with a convex surface facing the object side, a double concave lens L12, and a positive meniscus lens L13 with a convex surface facing the object side are disposed to form the first lens group G1; in order from the object side, a positive meniscus lens L21 with a concave surface facing the object side, a negative meniscus lens L22 with a convex surface facing the object side, and a positive meniscus lens L23 with a convex surface facing the object side are disposed to form the second lens group G2; in order from the object side, a cemented lens constructed by a positive meniscus lens L31 with a concave surface facing the object side cemented with a double concave lens L32 is disposed to form the third lens group G3; and in order from the object side, a positive meniscus lens L41 with a concave surface facing the object side, and a cemented lens constructed by a double convex lens L42, and a negative meniscus lens L43 with a concave surface facing the object side cemented together are disposed to form the fourth lens group G4. Respective lens groups prepared in such a way are disposed in accordance with the above described procedure to manufacture the variable magnification optical system ZL.

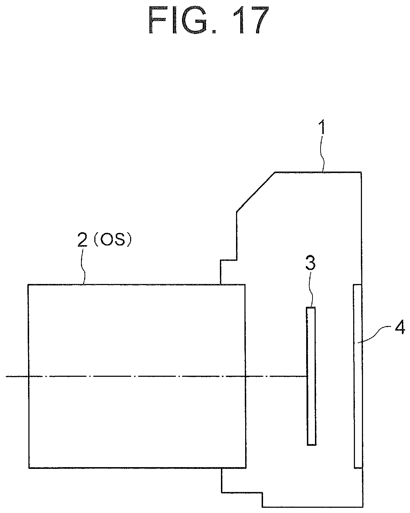

Next, a camera of an optical apparatus equipped with the variable magnification optical system ZL of a first example which is common to the first to third embodiments according to the present application is explained with reference to Fig.17. This camera 1 is a lens interchange type so-called mirror-less camera equipped with the variable magnification optical system ZL according to the first example of the present application as an imaging lens 2. In the camera 1, light emitted from an unillustrated object (subject to be photographically taken) is converged by the imaging lens 2 and passes through an unillustrated OLPF (Optical Low Pass Filter) to form a subject image on the imaging plane of an imaging part 3. Then, the subject image is photo-electrically converted by a photoelectric conversion element provided in the imaging part 3 to create an image of the subject. The created image is displayed on an EVF (Electronic View Finder) 4. Thereby, a photographer can observe the subject to be photographically taken via the EVF.

Further, when the photographer presses an unillustrated release button, the image photo-electrically converted by the imaging part 3 is stored in an unillustrated memory. In such a manner, the photographer can take a picture of the subject with the camera 1. Although, in the present embodiment, the mirror-less camera is explained as an example, the same effect can be obtained even in the case where the variable magnification optical system ZL according to the present embodiment is mounted on a single-lens reflex camera the body of which is provided with a quick return mirror and in which a subject to be photographically taken is observed via a finder optical system.

Note that it is possible to adopt contents described hereinafter below in a range that optical performance is not deteriorated.

Although in the variable magnification optical system ZL according to the embodiments 1 to 3 of the present application the four-lens-group configuration is adopted, it is possible to adopt a five-lens-group configuration, and six-lens-group configuration and so on. Also, it is possible to add a lens or a lens group on the most object side and a lens or a lens group on the most image side. Further, the lens group means a portion including at least one single lens separated by an air space.

It is possible to adopt a focusing lens group in which focusing from an infinitely distant object to a close distant object is carried out, with moving a single, a plurality of lens groups or a portion of a lens group in the optical axis direction. In this case, the focusing lens group is adaptable to an autofocus and a motor drive for an autofocus (Ultrasonic Motor, etc.). In particular, as described above, it is preferable that at least a portion of the first lens group G1 is made to be the focusing lens group.

Further, a lens group or a portion of lens group may be moved so as to have a component in a direction perpendicular to the optical axis, or may be rotationally moved (oscillated or swayed) so as to become a vibration reduction lens group for correcting an image blur generated due to a camera shake. In particular, as described above, it is preferable to form at least a portion of the second lens group G2 as a vibration reduction lens group.

It is possible that a lens surface is formed of a spherical surface, a flat surface or an aspherical surface. In the case where the lens surface is formed of the spherical surface or the flat surface, it becomes easy in lens processing and assembling adjustment and it is capable of preventing deterioration of optical performance due to errors in lens processing and assembling adjustment, so that it is preferable. Even though an image plane is deviated, deterioration of image forming performance is small. So, this is preferable. In the case where a lens surface is an aspherical surface, the aspherical surface may be an aspherical surface formed by means of grinding, a glass mold aspherical surface formed by casting a glass in a mold or a complex type aspherical surface formed by forming a resin on a surface of a glass so as to be an aspherical surface shape. Also, a lens surface may be a diffraction surface, and a lens may be a refractive index distribution type lens (GRIN Lens) or a plastic lens.

Although it is preferable to dispose the aperture stop S in the neighborhood of the third lens group G3, a member as an aperture stop is not necessarily disposed and instead a lens frame may be used for that role.

Further, in order to attain high contrast and high optical performance with reducing flare and ghost images, each lens surface may be formed with a reflection preventing coating having high transmittance in a wide wavelength range.

Further, in the variable magnification optical system ZL according to the first to third embodiments of the present application, a variable magnification ratio is 2.0 to 5.0.

Hereinafter, each example common to the first to third embodiments of the present application is explained with reference to the drawings. The first to fourth examples are all common to the first to third embodiments. Fig.1, Fig.5, Fig.9 and Fig.13 are sectional views showing the configuration of the variable magnification optical system ZL (ZL1 to ZL4) according to each example, refractive power distribution and a state of movement of each lens group in variation of focusing condition from an infinite focusing state to a close distance focusing state. Also, below the variable magnification optical systems ZL1 to ZL4 shown in sectional views, each arrow is depicted to indicate a moving direction along the optical axis of each lens group G1 to G4 upon zooming from a wide-angle end state (W) to a telephoto end state (T). Also, as shown in Fig.1, Fig.5, Fig.9 and Fig.13, each variable magnification optical system ZL1 to ZL4 according to the first to fourth examples is composed of, in order from an object side, a first lens group G1 having negative refractive power, a second lens group G2 having positive refractive power, a third lens group G3 having negative refractive power, and a fourth lens group G4 having positive refractive power. Upon zooming from the wide-angle end state to the telephoto end state, a distance between the first lens group G1 and the second lens group G2 is varied, a distance between the second lens group G2 and the third lens group G3 is increased and a distance between the third lens group G3 and the fourth lens group G4 is decreased. Thus, distance between each lens groups is varied.

In each example, when a height in a direction vertical to the optical axis is made to be y, a distance (sag amount) from a tangent plane of a vertex of each aspherical surface in the height y to respective aspherical surfaces along the optical axis is made to be S(y), a radius of curvature (paraxial radius of curvature) of a reference spherical surface is made to be r, a conical coefficient is made to be $\kappa$, and an aspherical surface coefficient of a n-th order is made to be An, the aspherical surface is represented by the following expression (a):

$$S(y) = (y^2/r) / [1 + (1 - \kappa \times y^2/r^2)^{1/2}]$$
$$+ A4 \times y^4 + A6 \times y^6 + A8 \times y^8 + A10 \times y^{10} \quad (a)$$

Note that, in each example, an aspherical surface coefficient A2 of a second order is zero. Also, in a table of each example, a * mark is appended on the right side of a surface number of each aspherical surface. Further, in the examples to be described below, "E-n"represents "$\times 10^{-n}$".

[First Example]

Fig.1 is a sectional view showing of a configuration of a variable magnification optical system ZL1 according to a first example. In the variable magnification optical system ZL1 shown in Fig. 1, a first lens group G1 is composed of, in order from the object side, a negative meniscus lens type aspherical negative lens L11 with a convex surface facing the object side, a double concave lens L12, and a positive meniscus lens L13 with a convex surface facing the object side. In the aspherical negative lens L11, an image side glass lens surface (Second Surface) is formed with a resin layer, and an image side surface of the resin layer (third surface) is formed so as to be an aspherical shape. A second lens group G2 is composed of, in order from the object side, a positive meniscus lens L21 with a concave surface facing the object side, a negative meniscus lens L22 with a convex surface facing the object side, and a positive meniscus lens L23 with a convex surface facing the object side. A third lens group G3 is composed of, in order from the object side, a cemented lens constructed by a positive meniscus lens L31 with a concave surface facing the object side cemented with a double concave lens L32. A fourth lens group G4 is composed of, in order from the object side, a positive meniscus lens L41 with a concave surface facing the object side, and a cemented lens constructed by a double convex lens L42 cemented with a negative meniscus lens 43 with a concave surface facing the object side.

Also, an aperture stop S is disposed between the second lens group G2 and the third lens group G3 (in the neighborhood on the object side of the third lens group G3), and is moved together with the third lens group G3 upon zooming from a wide-angle end state to a telephoto end state. Also, focusing from infinity to a close distant object is carried out with moving the first lens group G1 in a direction to an object.

Also, image blur correction (vibration reduction) is carried out with making the positive meniscus lens L21 of the second lens group G2 as a vibration reduction lens group VL, and moving the vibration reduction lens group VL to have a component in a direction perpendicular to the optical axis.

In order to correct a rotational camera shake of an angle $\theta$ with a lens system in which a focal length of the entire system is made to be f, and a vibration reduction coefficient (a ratio of moving amount of an image in the image plane to a moving amount of the vibration reduction lens group VL in image blur correction) is made to be K, the vibration reduction lens group VL for blur correction is moved in a direction perpendicular to the optical axis by (f $\times$ tan$\theta$)/K (the same as in examples to be described later). At the wide-angle end state of the first example, since, a vibration reduction coefficient is 0.77 and a focal length is 18.11 (mm), the moving amount of the vibration reduction lens group VL for correcting the rotational camera shake of 0.45°is 0.18 (mm). Also, at the telephoto end state of the first example, since the vibration reduction coefficient is 1.29 and the focal length is 50.92 (mm), the moving amount of the vibration reduction lens group VL for correcting a rotational camera shake of 0.27°is 0.18 (mm).

Various values associated with the first example are listed in Table 1 below. In the Table 1, "W" denotes a wide-angle end state, "M" denotes an intermediate focal length state, "T" denotes a telephoto end state, "f" denotes a focal length, "FNO" denotes an F number, "2$\omega$" denotes an angle of view, "TL" denotes an entire lens system length. Here, the entire lens system length TL represents distance from a first surface among lens surfaces to the image plane I on the optical axis upon focusing on infinity. Further, in Lens Date, the first column "m" shows the order of lens surfaces (surface number) from the object side along a light progressing direction, the second column "r" shows a radius of curvature of each lens, the third column "d" shows a distance from each lens surface to a next lens surface (surface to surface distance) on the optical axis, the fourth column "vd" and the fifth column "nd" show an Abbe number and a refractive index to a d-line ($\lambda$=587.6nm). Also, a radius of curvature 0.0000 represents a plane surface and the refractive index of air 1.0000 is omitted. Note that surface numbers 1 to 22 shown in Table 1 correspond to numbers 1 to 22 shown in Fig.1. Also, "Focal Length of Lens Group" shows a starting surface "ST" and a focal length "f" of each lens group G1 to G4. Although "mm" is used as a unit of length for listed various values of the focal length f, the radius of curvature r, the surface to surface distance d, but even though the optical system is proportionally enlarged or proportionally reduced, the same optical performance can be obtained, so that it is not necessarily limited to "mm". Also, the explanation of these symbols and various values in Tables are the same in examples to be described later.

(Table 1)

[Specifications]

|  | W |  | M |  | T |
|---|---|---|---|---|---|
| f = | 18.11 | - | 43.19 | - | 50.92 |
| FNO = | 3. 62 | - | 5.12 | - | 5.72 |
| 2ω = | 79.5 | - | 36.33 | - | 31.1 |
| TL = | 127.96 | - | 121.45 | - | 125.27 |

[Lens Date]

| m | r | d |  | vd | nd |
|---|---|---|---|---|---|
| 1 | 69.440 | 2.00 |  | 61.22 | 1.58913 |
| 2 | 15.900 | 0.17 |  | 38.09 | 1.55389 |
| 3* | 13.749 | 10.00 |  |  |  |
| 4 | -284.727 | 1.50 |  | 50.84 | 1.65844 |
| 5 | 39.340 | 2.70 |  |  |  |
| 6 | 31.807 | 2.80 | 23.78 | 1.84666 |  |
| 7 | 65.687 | d7 |  |  |  |
| 8 | -169.197 | 2.00 | 58.54 | 1.61272 |  |
| 9 | -33.549 | 1.00 |  |  |  |
| 10 | 18.465 | 0.90 | 25.26 | 1.90200 |  |
| 11 | 13.324 | 0.40 |  |  |  |
| 12 | 13.850 | 3.80 | 67.90 | 1.59319 |  |
| 13 | 205.700 | d13 |  |  |  |
| 14 | 0.000 | 1.50 |  | Aperture Stop S |  |
| 15 | -66.540 | 2.60 | 25.45 | 1.80518 |  |
| 16 | -13.193 | 0.80 | 37.18 | 1.83400 |  |
| 17 | 52.452 | d17 |  |  |  |
| 18 | -110.104 | 2.80 | 70.31 | 1.48749 |  |
| 19 | -17.370 | 0.10 |  |  |  |
| 20 | 81.550 | 4.20 | 63.88 | 1.51680 |  |
| 21 | -15.015 | 1.30 | 37.18 | 1.83400 |  |
| 22 | -54.306 | Bf |  |  |  |

[Focal Length of Lens Group]

|  | ST | f |
|---|---|---|
| G1 | 1 | -25.74 |
| G2 | 8 | 27.22 |
| G3 | 15 | -32.68 |
| G4 | 18 | 40.31 |

In the first example, a third surface is formed so as to be an aspherical surface shape. The following Table 2 shows an aspherical surface data, in other words, a conical coefficient κ and each aspherical surface constant A4 to A10.

(Table 2)

| m | K | A4 | A6 | A8 | A10 |
|---|---|---|---|---|---|
| 3 | -1.0 | 2.55993E-05 | 4.63315E-08 | -2.4760E-11 | 6.32636E-13 |

In the first example, an on-axis distance d7 between the first lens group G1 and the second lens group G2, an on-axis distance d13 between the second lens group G2 and an aperture stop S to be moved together with the third lens group G3, an on-axis distance d17 between the third lens group G3 and the fourth lens group G4, and a back focal length Bf are varied upon zooming. The following Table 3 shows values of variable distance and back focal length Bf in each focal length at the wide-angle end state W, at the intermediate focal length state M and the telephoto end state T upon focusing on infinity. Note that the back focal length Bf means a distance from the most image side lens surface (22-th surface shown in Fig.1) to the image plane I. This explanation is the same in examples to be described later.

(Table 3)

[Variable Distance Data]

|     | W     | M     | T     |
| --- | ----- | ----- | ----- |
| f   | 18.11 | 43.19 | 50.92 |
| d7  | 32.88 | 5.45  | 2.93  |
| d13 | 2.87  | 10.64 | 12.40 |
| d17 | 13.06 | 5.29  | 3.53  |
| Bf  | 38.58 | 59.50 | 65.84 |

The following Table 4 shows a value of each conditional expression in the first example. Note that, in the Table 4, f2 denotes a focal length of the second lens group G2, f3 denotes a focal length of the third lens group G3, f4 denotes a focal length of the fourth lens group G4, f1gf is a focal length of a first negative lens of the first lens group G1, f1gr denotes a focal length of a positive lens of the first lens group G1, and D3w denotes a distance between the third lens group G3 and the fourth lens group G4 at the wide-angle end state. Explanation of the above described symbols is the same in examples to be described later.

(Table 4)

| (1) | D3w / (-f3)    | = | 0.40 |
| --- | -------------- | - | ---- |
| (2) | f1gr / (-f1gf) | = | 2.35 |
| (3) | f2 / (-f3)     | = | 0.83 |
| (4) | f2 / f4        | = | 0.68 |

Thus, the variable magnification optical system ZL1 according to the first example satisfies all the conditional expressions (1) to (4).

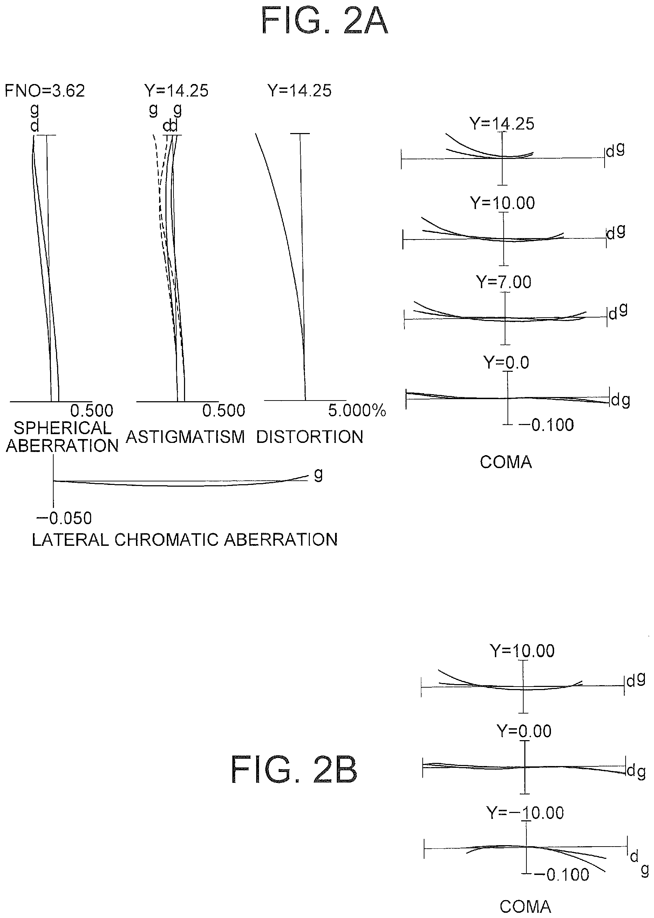

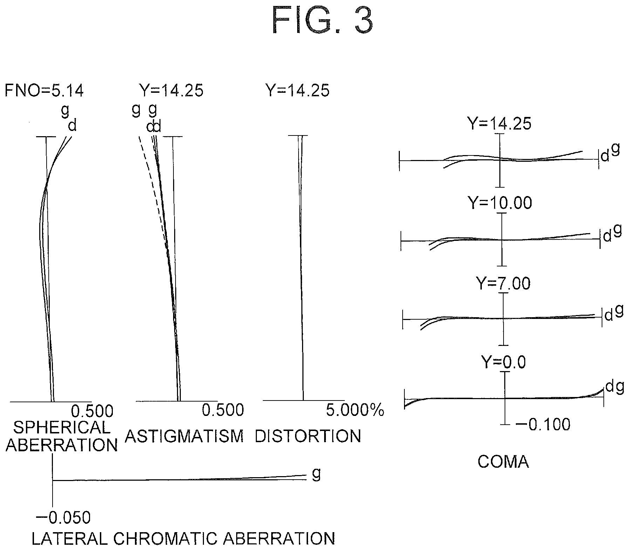

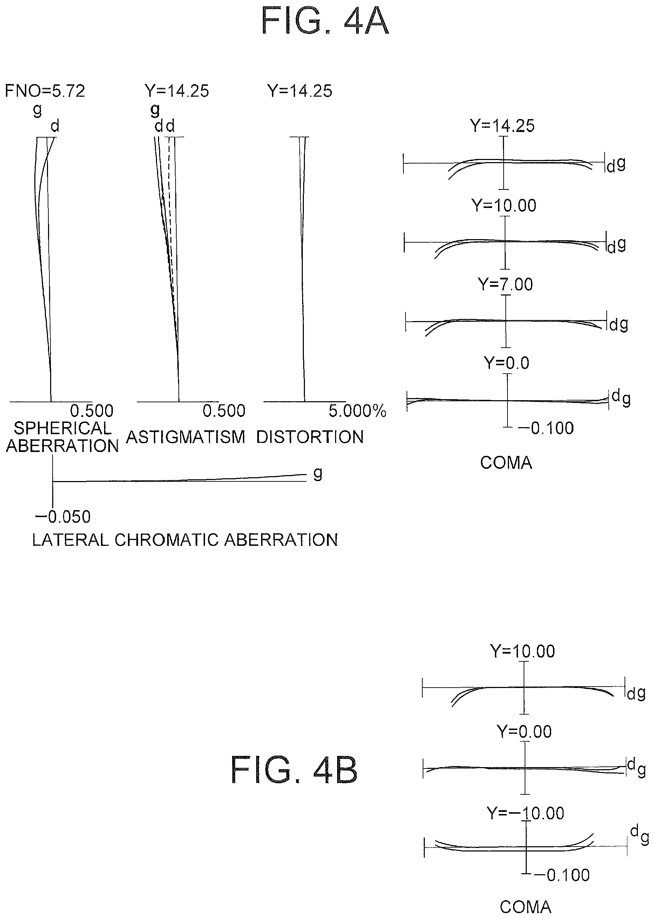

Fig.2A shows graphs of various aberrations in an infinite focusing state at the wide-angle end state in the first example, Fig.3 shows graphs of various aberrations in the infinite focusing state at the intermediate focal length state in the first example, and Fig.4A shows graphs of various aberrations in an infinite focusing state at the telephoto end state in the first example. Also, Fig.2B shows graphs of coma at the time of carrying out correction of an image blur (a moving amount of the vibration reduction lens group VL = 0.18) in the infinite focusing state at the wide-angle end state in the first example, and Fig.4B shows graphs of coma at the time of carrying out correction of an image blur (the moving amount of the vibration reduction lens group VL = 0.18) in the infinite focusing state at the telephoto end state in the first example. In these graphs, FNO denotes an F number, Y denotes a height of an image to a half angle of view, d denotes a d-line ($\lambda$ = 587.6nm), and g denotes a g-line ($\lambda$ = 435.6nm). Also, in the graphs showing astigmatism, a solid line represents a sagittal image plane and a broken line represents a meridional image plane. The explanation with regard to these graphs of the various aberrations is the same in examples to be described later. As apparent from the graphs of the various aberrations, in the first example, it is well understood that the various aberrations from the wide-angle end state to the telephoto end state are corrected superbly, and variation of the aberrations at the time of correcting a camera shake is superb, so that excellent optical performance can be obtained.

[Second Example]

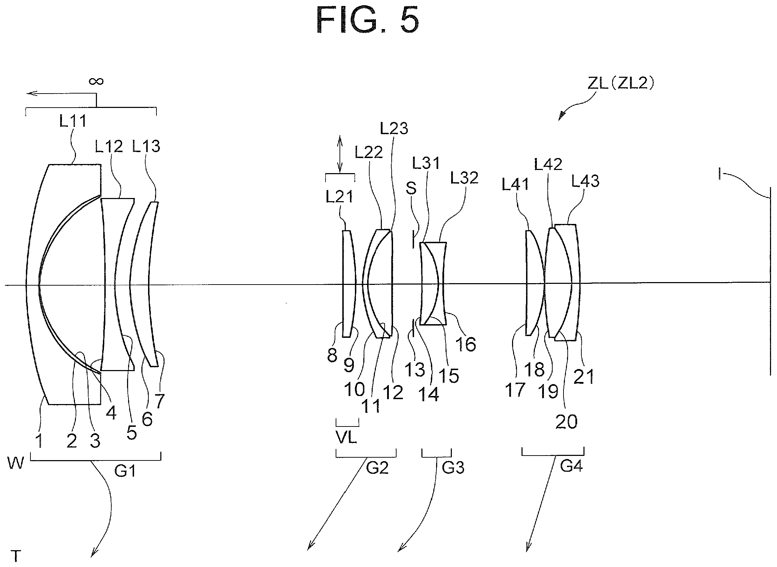

Fig.5 shows a configuration of a variable magnification optical system ZL2 according to a second example. In the variable magnification optical system ZL2 shown in Fig.5, a first lens group G1 is composed of, in order from an object side, a negative meniscus lens type aspherical negative lens L11 with a convex surface facing the object side, a double concave lens L12, and a positive meniscus lens L13 with a convex surface facing the object side. In the aspherical negative lens L11, an image side glass lens surface (second surface) is formed with a resin layer, and an image side surface of the resin layer (third surface) is formed so as to be an aspherical shape. A second lens group G2 is composed of, in order from the object side, a positive meniscus lens L21 with a concave surface facing the object side, and a cemented lens constructed by a negative meniscus lens L22 with a convex surface facing the object side cemented with a double convex lens L23. A third lens group G3 is composed of, in order from the object side, a cemented lens constructed by a positive meniscus lens L31 with a concave surface facing the object side cemented with a double concave lens L32. A fourth lens group G4 is composed of, in order from the object side, a positive meniscus lens L41 with a concave surface facing the object side, and a cemented lens constructed by a double convex lens L42 cemented with a negative meniscus lens 43 with a concave surface facing the object side.

Further, an aperture stop S is disposed between the second lens group G2 and the third lens group G3 (in the neighborhood of the object side of the third lens group G3) and moved together with the third lens group G3 upon zooming from a wide-angle end state to a telephoto end state. Also, focusing from infinity to a close distant object is carried out by moving the first lens group G1 in a direction to an object.

Further, image blur correction (vibration reduction) is carried out by making the positive meniscus lens L21 of the second lens group G2 as a vibration reduction lens group VL, and moving the vibration reduction lens group VL so as to have a component in a direction perpendicular to the optical axis. At the wide-angle end state of the second example, since a vibration reduction coefficient is 0.65 and a focal length is 10.30(mm), the moving amount of the vibration reduction lens group VL for correcting the rotational camera shake of 0.61° is 0.17(mm). Furthermore, at the telephoto end state of the second example, since the vibration reduction coefficient is 1.10 and a focal length is 29.60 (mm), the moving amount of the vibration reduction lens group VL for correcting the rotational camera shake of 0.36° is 0.17(mm).

The following Table 5 shows various values associated with the second example. Note that surface numbers 1 to 21 in the Table 5 correspond to numbers 1 to 21 shown in Fig.5.

(Table 5)

[Specifications]

|  | W |  | M |  | T |
|---|---|---|---|---|---|
| f = | 10.30 | - | 19.40 | - | 29.60 |
| FNO = | 3.64 | - | 4.53 | - | 5.67 |
| 2ω = | 80.2 | - | 45.84 | - | 30.7 |
| TL = | 68.73 | - | 64.04 | - | 67.33 |

[Lens Date]

| m | r | d | vd | nd |
|---|---|---|---|---|
| 1 | 31.564 | 1.11 | 61.22 | 1.58913 |
| 2 | 8.825 | 0.09 | 38.09 | 1.55389 |
| 3* | 7.604 | 5.72 |  |  |
| 4 | -70.851 | 0.83 | 63.88 | 1.51680 |
| 5 | 17.760 | 1.33 |  |  |
| 6 | 16.239 | 1.67 | 25.64 | 1.78472 |
| 7 | 34.618 | d7 |  |  |
| 8 | -230.613 | 1.08 | 61.22 | 1.58913 |
| 9 | -22.997 | 0.56 |  |  |
| 10 | 10.388 | 0.50 | 23.78 | 1.84666 |
| 11 | 6.916 | 2.16 | 60.71 | 1.56384 |
| 12 | -116.864 | d12 |  |  |
| 13 | 0.000 | 0.83 |  | Aperture Stop S |
| 14 | -40.668 | 1.44 | 25.45 | 1.80518 |
| 15 | -6.308 | 0.44 | 37.18 | 1.83400 |
| 16 | 25.885 | d16 |  |  |
| 17 | -102.429 | 1.55 | 70.31 | 1.48749 |
| 18 | -10.217 | 0.06 |  |  |
| 19 | 33.821 | 2.33 | 70.31 | 1.48749 |
| 20 | -9.235 | 0.72 | 37.18 | 1.83400 |
| 21 | -33.599 | Bf |  |  |

[Focal Length of Lens Group]

|  | ST | f |
|---|---|---|
| G1 | 1 | -14.60 |
| G2 | 8 | 14.57 |

(continued)

[Focal Length of Lens Group]

| | ST | f |
|---|---|---|
| G3 | 14 | -17.43 |
| G4 | 17 | 21.82 |

In the second example, a third surface is formed so as to be an aspherical surface shape. The following Table 6 shows an aspherical surface data, in other words, values of a conical coefficient $\kappa$ and each aspherical surface constant A4 to A10.

(Table 6)

| m | $\kappa$ | A4 | A6 | A8 | A10 |
|---|---|---|---|---|---|
| 3 | -1.0 | 1.69521E-04 | 8.82411E-07 | -4.21030E-11 | 1.60414E-10 |

In the second example, an on-axis distance d7 between the first lens group G1 and the second lens group G2, an on-axis distance d12 between the second lens group G2 and the aperture stop S to be moved together with the third lens group G3, an on-axis distance d16 between the third lens group G3 and the fourth lens group G4, and a back focal length Bf are varied upon zooming. The following Table 7 shows values of variable distance and back focal length Bf in each focal length at the wide-angle end state, at the intermediate focal length state, and the telephoto end state upon focusing on infinity.

(Table 7)

[Variable Distance Data]

| | W | M | T |
|---|---|---|---|
| f | 10.30 | 19.40 | 29.60 |
| d7 | 17.11 | 4.64 | 0.59 |
| d12 | 1.83 | 4.40 | 7.11 |
| d16 | 7.36 | 4.79 | 2.08 |
| Bf | 20.00 | 27.79 | 35.11 |

The following Table 8 shows a corresponding value of each conditional expression in the second example.

(Table 8)

| (1) | D3w / (-f3) | = | 0.42 |
|---|---|---|---|
| (2) | f1gr / (-f1gf) | = | 2.14 |
| (3) | f2 / (-f3) | = | 0.84 |
| (4) | f2 / f4 | = | 0.67 |

Thus, the variable magnification optical system ZL2 according to the second example satisfies all the conditional expressions (1) to (4).

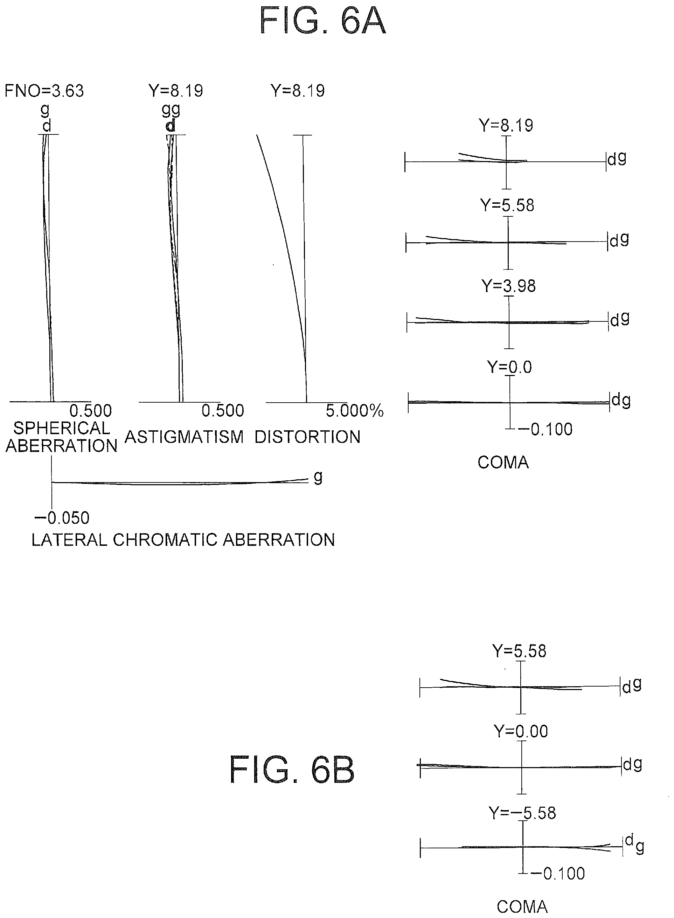

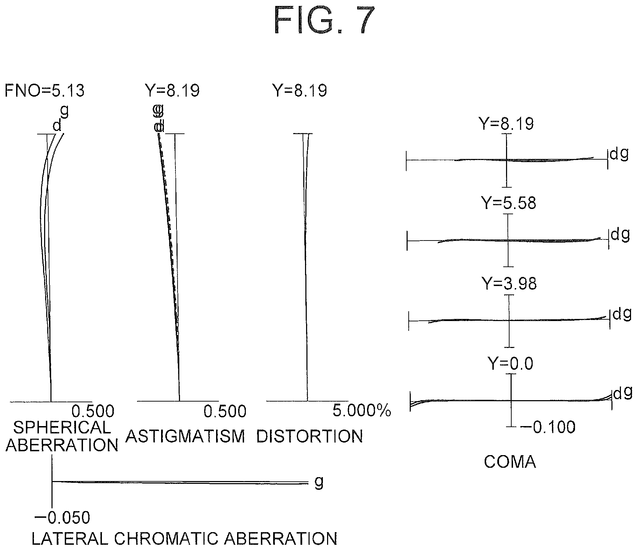

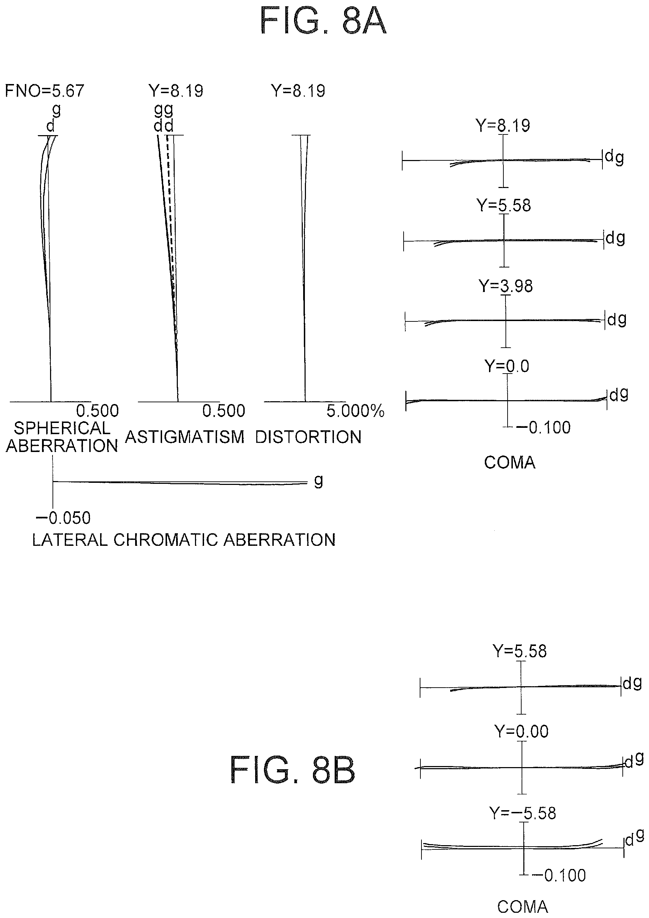

Fig.6A shows graphs of various aberrations in an infinite focusing state at the wide-angle end state in the second example, Fig.7 shows graphs of various aberrations in the infinite focusing state at the intermediate focal length state in the second example, and Fig.8A shows graphs of various aberrations in the infinite focusing state at the telephoto end state in the second example. Also, Fig.6B shows graphs of coma at the time of carrying out correction of an image blur (a moving amount of the vibration reduction lens group VL = 0.17) in the infinite focusing state at the wide-angle end state in the second example. Fig.8B shows graphs of coma at the time of carrying out correction of an image blur (the moving amount of the vibration reduction lens group VL = 0.17) in the infinite focusing state at the telephoto end state in the second example. As apparent from the graphs of the various aberrations, in the second example, it is well understood that the various aberrations in each focal length state from the wide-angle end state to the telephoto end state are corrected excellently, and variation of the aberrations at the time of correcting a camera shake is excellent, so that excellent optical performance can be obtained.

[Third Example]

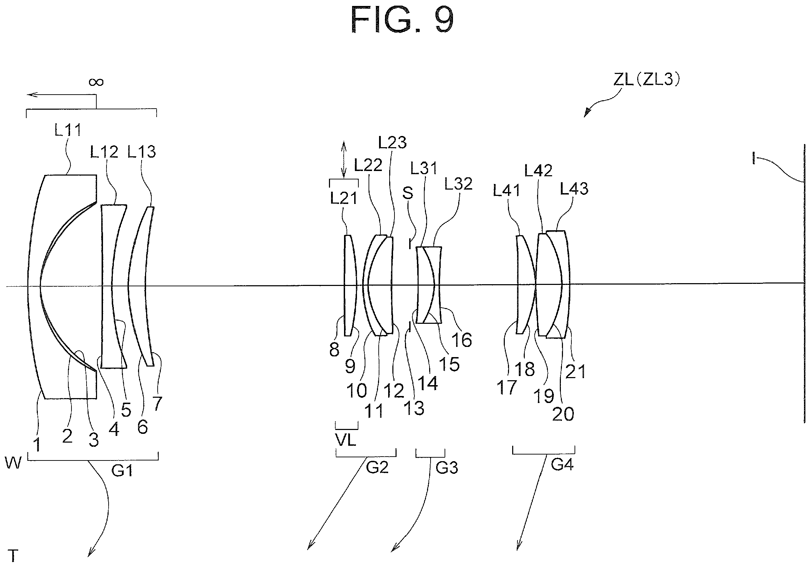

Fig.9 shows a configuration of a variable magnification optical system ZL3 according to a third example. In the variable magnification optical system ZL3 shown in Fig.9, a first lens group G1 is composed of, in order from an object side, a negative meniscus lens type aspherical negative lens L11 with a convex surface facing the object side, a double concave lens L12, and a positive meniscus lens L13 with a convex surface facing the object side. In the aspherical negative lens L11, an image side glass lens surface (second surface) is formed with a resin layer and an image side surface of the resin layer (third surface) is formed so as to be an aspherical shape. A second lens group G2 is composed of, in order from the object side, a positive meniscus lens L21 with a concave surface facing the object side, and a cemented lens constructed by a negative meniscus lens L22 with a convex surface facing the object side cemented with a positive meniscus lens L23 with a convex surface facing the object side. A third lens group G3 is composed of, in order from the object side, a cemented lens constructed by a positive meniscus lens L31 with a concave surface facing the object side cemented with a double concave lens L32. A fourth lens group G4 is composed of, in order from the object side, a positive meniscus lens L41 with a concave surface facing the object side, and a cemented lens constructed by a double convex lens L42 cemented with a negative meniscus lens 43 with a concave surface facing the object side.

Further, an aperture stop S is disposed between the second lens group G2 and the third lens group G3 (in the neighborhood of the object side of the third lens group G3) and moved together with the third lens group G3 upon zooming from a wide-angle end state to a telephoto end state. Also, focusing from infinity to a close distant object is carried out by moving the first lens group G1 in a direction to an object.

Also, image blur correction (vibration reduction) is carried out with making the positive meniscus lens L21 of the second lens group G2 as a vibration reduction lens group VL, and moving the vibration reduction lens group VL so as to have a component in a direction perpendicular to the optical axis. At the wide-angle end state of the third example, since a vibration reduction coefficient is 0.84 and a focal length is 18.50(mm), the moving amount of the vibration reduction lens group VL for correcting the rotational camera shake of 0.44° is 0.17(mm). Furthermore, at the telephoto end state of the third example, since the vibration reduction coefficient is 1.45 and a focal length is 53.40(mm), the moving amount of the vibration reduction lens group VL for correcting a rotational camera shake of 0.26° is 0.17(mm).

The following Table 9 shows various values associated with the third example. Note that surface numbers 1 to 21 in the Table 9 correspond to numbers 1 to 21 shown in Fig.9.

(Table 9)

[Specifications]

|  | W |  | M |  | T |
|---|---|---|---|---|---|
| f = | 18.50 | - | 35.00 | - | 53.40 |
| FNO = | 3.64 | - | 4.58 | - | 5.87 |
| 2ω = | 78.2 | - | 44.4 | - | 29.7 |
| TL = | 127.58 | - | 119.94 | - | 122.39 |

[Lens Date]

| m | r | d |  | vd | nd |
|---|---|---|---|---|---|
| 1 | 69.440 | 2.00 |  | 61.22 | 1.58913 |
| 2 | 15.900 | 0.17 |  | 38.09 | 1.55389 |
| 3* | 13.749 | 10.00 |  |  |  |
| 4 | -284.727 | 1.50 |  | 50.84 | 1.65844 |
| 5 | 39.340 | 2.70 |  |  |  |
| 6 | 31.807 | 2.80 |  | 23.78 | 1.84666 |
| 7 | 65.687 | d7 |  |  |  |
| 8 | -823.405 | 2.00 |  | 58.54 | 1.61272 |
| 9 | -36.990 | 1.00 |  |  |  |
| 10 | 18.878 | 0.90 | 25.26 | 1.90200 |  |
| 11 | 12.630 | 3.80 | 58.54 | 1.61272 |  |
| 12 | 136.708 | d12 |  |  |  |
| 13 | 0.000 | 1.50 |  | Aperture Stop S |  |
| 14 | -64.796 | 2.60 | 25.45 | 1.80518 |  |
| 15 | -12.403 | 0.80 | 37.18 | 1.83400 |  |
| 16 | 52.452 | d16 |  |  |  |
| 17 | -136.622 | 2.80 | 70.31 | 1.48749 |  |

(continued)

[Lens Date]

| m | r | d | | vd | nd |
|---|---|---|---|---|---|
| 18 | -17.927 | 0.10 | | | |
| 19 | 90.259 | 4.20 | | 63.88 | 1.51680 |
| 20 | -15.399 | 1.30 | | 37.18 | 1.83400 |
| 21 | -54.3063 | Bf | | | |

[Focal Length of Lens Group]

| | ST | f |
|---|---|---|
| G1 | 1 | -25.74 |
| G2 | 8 | 26.90 |
| G3 | 14 | -32.18 |
| G4 | 17 | 40.64 |

In the third example, a third surface is formed so as to be an aspherical surface shape. The following Table 10 shows an aspherical surface data, in other words, a conical coefficient $\kappa$ and each aspherical surface constant A4 to A10.

(Table 10)

| m | $\kappa$ | A4 | A6 | A8 | A10 |
|---|---|---|---|---|---|
| 3 | -1.0 | 2.55993E-05 | 4.63315E-08 | -2.47460E-11 | 6.32636E-13 |

In the third example, an on-axis distance d7 between the first lens group G1 and the second lens group G2, an on-axis distance d12 between the second lens group G2 and an aperture stop S to be moved with the third lens group G3, an on-axis distance d16 between the third lens group G3 and the fourth lens group G4, and a back back focal length Bf are varied upon zooming. The following Table 11 shows values of variable distance and back focal length Bf in each focal length at the wide-angle end state, at the intermediate focal length state, and the telephoto end state upon focusing on infinity.

(Table 11)

[Variable Distance Data]

| | W | M | T |
|---|---|---|---|
| f | 18.50 | 35.00 | 53.40 |
| d7 | 32.88 | 10.21 | 2.93 |
| d12 | 2.87 | 7.53 | 12.40 |
| d16 | 13.06 | 8.39 | 3.53 |
| Bf | 38.60 | 53.63 | 67.80 |

The following Table 12 shows a value of each conditional expression in the third example.

(Table 12)

| | | | |
|---|---|---|---|
| (1) | D3w / (-f3) | = | 0.41 |
| (2) | f1gr / (-f1gf) | = | 2.35 |
| (3) | f2 / (-f3) | = | 0.84 |
| (4) | f2 / f4 | = | 0.66 |

Thus, the variable magnification optical system ZL3 according to the third example satisfies all the conditional expressions (1) to (4).

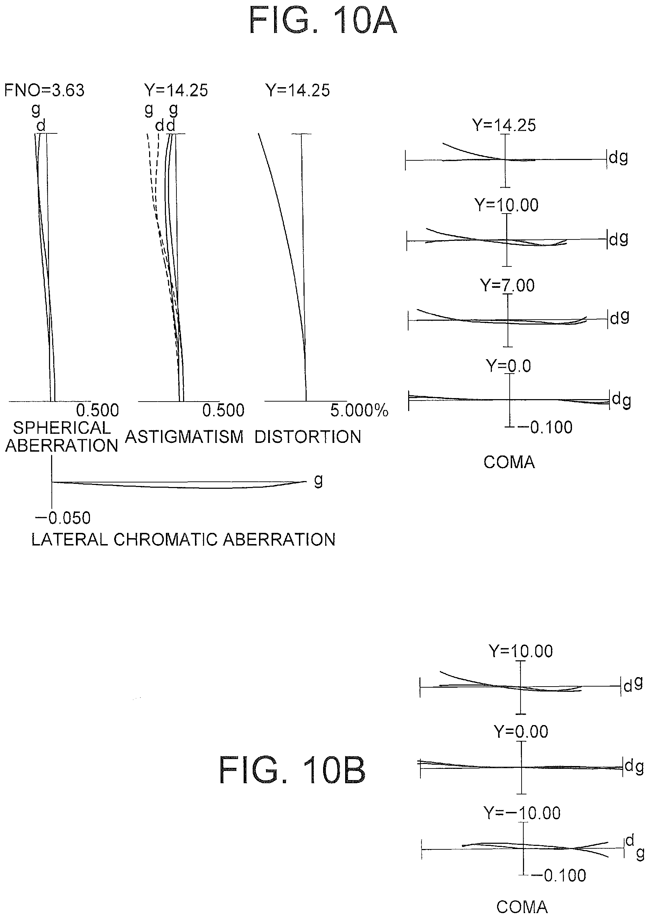

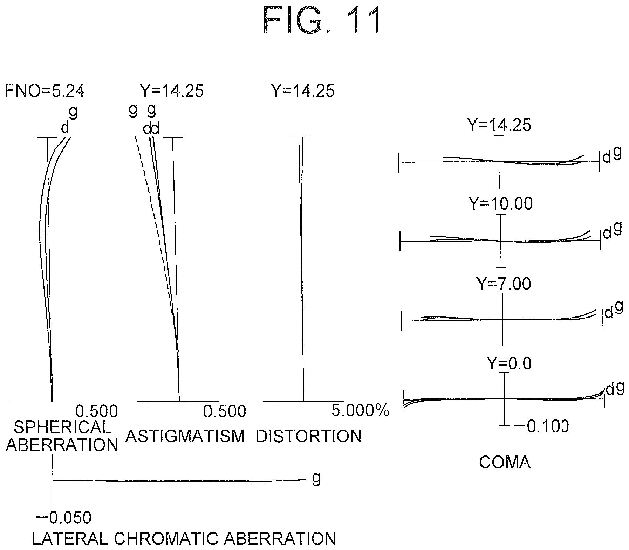

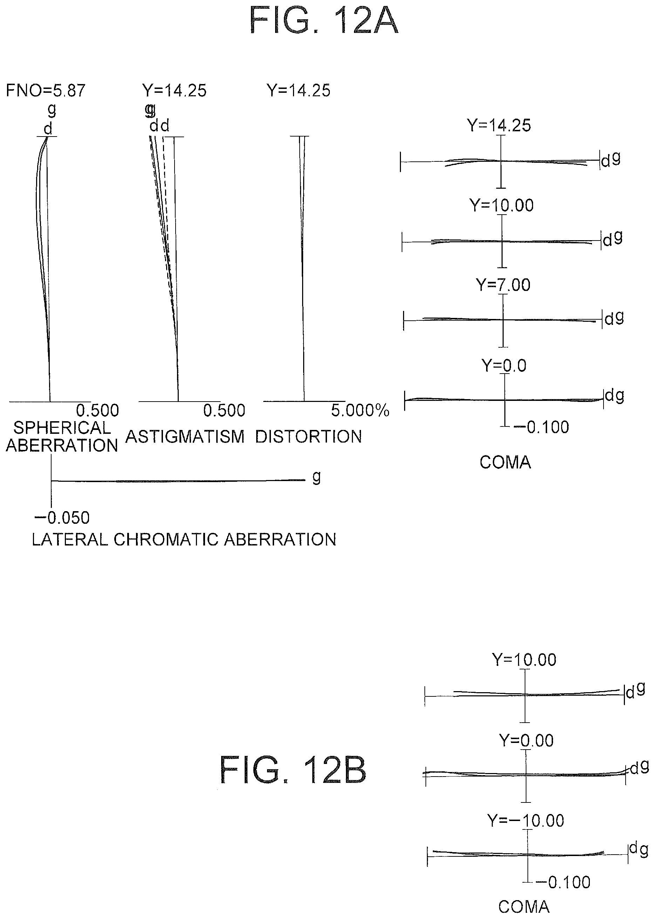

Fig.10A shows graphs of various aberrations in an infinite focusing state at the wide-angle end state in the third example, Fig.11 shows graphs of various aberrations in the infinite focusing state at the intermediate focal length state in the third example, and Fig.12A shows graphs of various aberrations in the infinite focusing state at the telephoto end state in the third example. Also, Fig.10B shows graphs of coma at the time of carrying out correction of an image blur (a moving amount of the vibration reduction lens group VL = 0.17) in the infinite focusing state at the wide-angle end state in the third example and Fig.12B shows graphs of coma at the time of carrying out correction of an image blur (a moving amount of the vibration reduction lens group VL = 0.17) in the infinite focusing state at the telephoto end state in the third example. As apparent from the graphs of the various aberrations, in the third example, it is well understood that the various aberrations in each focal length state from the wide-angle end state to the telephoto end state are corrected excellently, and variation of the aberrations at the time of correcting a camera shake is excellent, so that an excellent optical performance can be obtained.

[Fourth Example]

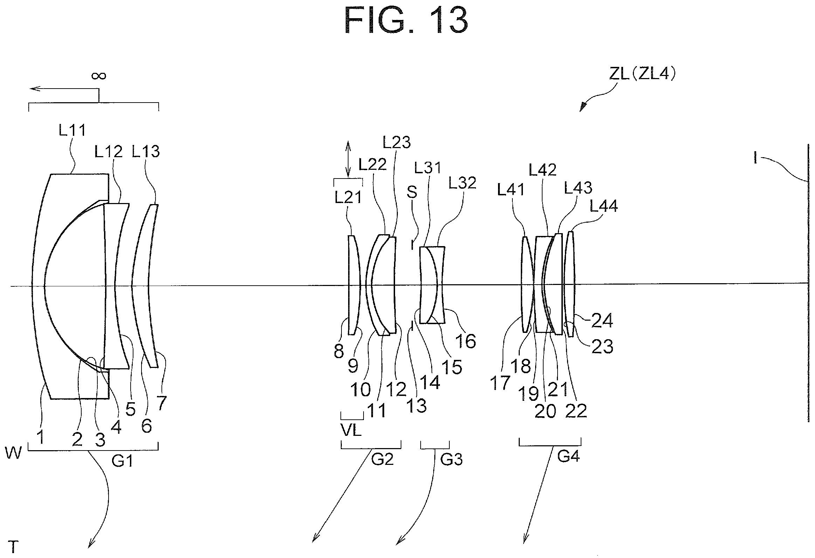

Fig.13 shows a configuration of a variable magnification optical system ZL4 according to a fourth example. In the variable magnification optical system ZL4 shown in Fig.13, a first lens group G1 is composed of, in order from the object side, a negative meniscus lens type aspherical negative lens L11 with a convex surface facing the object side, a double concave lens L12, and a positive meniscus lens L13 with a convex surface facing the object side. In the aspherical negative lens L11, an image side glass lens surface (second surface) is formed with a resin layer and an image side surface of the resin layer (third surface) is formed so as to be an aspherical shape. A second lens group G2 is composed of, in order from the object side, a positive meniscus lens L21 with a concave surface facing the object side, and a cemented lens constructed by a negative meniscus lens L22 with a convex surface facing the object side cemented with a positive meniscus lens L23 with a convex surface facing the object side. A third lens group G3 is composed of, in order from the object side, a cemented lens constructed by a positive meniscus lens L31 with a concave surface facing the object side cemented with a double concave lens L32. A fourth lens group G4 is composed of, in order from the object side, a double convex lens L41, a negative meniscus lens 42 with a convex surface facing the object side, a positive meniscus lens L43 with a convex surface facing the object side, and a double convex lens L44.

Further, an aperture stop S is disposed between the second lens group G2 and the third lens group G3 (in the neighborhood of the object side of the third lens group G3) and moved together with the third lens group G3 upon zooming from a wide-angle end state to a telephoto end state. Also, focusing from infinity to a close distant object is carried out by moving the first lens group G1 in a direction to an object.

Further, image blur correction (vibration reduction) is carried out by making the positive meniscus lens L21 of the second lens group G2 as a vibration reduction lens group VL, and moving the vibration reduction lens group VL so as to have a component in a direction perpendicular to the optical axis. At the wide-angle end state of the fourth example, since a vibration reduction coefficient is 0.81 and a focal length is 18.74(mm), a moving amount of the vibration reduction lens group VL for correcting the rotational camera shake of 0.45° is 0.18(mm). Furthermore, at the telephoto end state of the fourth example, since the vibration reduction coefficient is 1.38 and a focal length is 53.15(mm), the moving amount of the vibration reduction lens group VL for correcting a rotational camera shake of 0.27° is 0.18(mm).

The following Table 13 shows various values of the fourth example. Note that surface numbers 1 to 24 in the Table 13 correspond to numbers 1 to 24 shown in Fig. 13.

(Table 13)

[Specifications]

| | W | | M | | T |
|---|---|---|---|---|---|
| f = | 18.74 | - | 44.99 | - | 53.15 |
| FNO | = 3.47 | - | 5.15 | - | 6.12 |
| 2ω = | 78.0 | - | 34.9 | - | 29.7 |
| TL= | 127.97 | - | 122.70 | - | 123.10 |

[Lens Date]

| m | r | d | vd | nd |
|---|---|---|---|---|
| 1 | 60.955 | 2.00 | 61.22 | 1.58913 |
| 2 | 14.479 | 0.17 | 38.09 | 1.55389 |
| 3* | 14.004 | 10.00 | | |
| 4 | -189.528 | 1.50 | 50.84 | 1.65844 |
| 5 | 41.116 | 2.70 | | |
| 6 | 32.479 | 2.80 | 23.78 | 1.84666 |
| 7 | 65.687 | d7 | | |
| 8 | -471.246 | 2.00 | 58.54 | 1.61272 |
| 9 | -36.768 | 1.00 | | |
| 10 | 18.710 | 0.90 | 25.26 | 1.90200 |

(continued)

[Specifications]

| | | | | |
|---|---|---|---|---|
| 11 | 12.572 | 3.80 | 58.54 | 1.61272 |
| 12 | 136.708 | d12 | | |
| 13 | 0.000 | 1.50 | | Aperture Stop S |
| 14 | -68.773 | 2.60 | 25.45 | 1.80518 |
| 15 | -12.883 | 0.80 | 37.18 | 1.83400 |
| 16 | 52.452 | d16 | | |
| 17 | 130.964 | 2.00 | 70.31 | 1.48749 |
| 18 | -28.695 | 0.10 | | |
| 19 | 97.235 | 1.30 | 37.18 | 1.83400 |
| 20 | 18.752 | 0.30 | | |
| 21 | 19.4416 | 3.00 | 63.88 | 1.51680 |
| 22 | 737.7872 | 0.30 | | |
| 23 | 50.7898 | 1.80 | 63.88 | 1.51680 |
| 24 | -142.991 | Bf | | |

[Focal Length of Lens Group]

| | ST | f |
|---|---|---|
| G1 | 1 | -26.03 |
| G2 | 8 | 26.97 |
| G3 | 14 | -33.06 |
| G4 | 17 | 41.33 |

In the fourth example, a third surface is formed so as to be an aspherical surface shape. The following Table 14 shows an aspherical surface data, in other words, a conical coefficient $\kappa$ and each aspherical surface constant A4 to A10.

(Table 14)

| m | $\kappa$ | A4 | A6 | A8 | A10 |
|---|---|---|---|---|---|
| 3 | -1.0 | 2.55993E-05 | 4.63315E-08 | -2.47460E-11 | 6.32636E-13 |

In the fourth example, an on-axis distance d7 between the first lens group G1 and the second lens group G2, an on-axis distance d12 between the second lens group G2 and the aperture stop S to be moved together with the third lens group G3, an on-axis distance d16 between the third lens group G3 and the fourth lens group G4, and a back focal length Bf are varied upon zooming. The following Table 15 shows values of variable distance and back focal length Bf in each focal length at the wide-angle end state, at the intermediate focal length state, and the telephoto end state upon focusing on infinity.

(Table 15)

[Variable Distance Data]

| | W | M | T |
|---|---|---|---|
| f | 18.74 | 44.99 | 53.15 |
| d7 | 32.88 | 5.45 | 2.93 |
| d12 | 2.87 | 10.64 | 12.40 |
| d16 | 13.06 | 5.29 | 3.53 |
| Bf | 38.59 | 60.76 | 67.54 |

The following Table 16 shows a corresponding value of each conditional expression in the fourth example.

(Table 16)

| | | | |
|---|---|---|---|
| (1) | D3w / (-f3) | = | 0.40 |
| (2) | f1gr / (-f1gf) | = | 2.32 |

(continued)

| (3) | f2 / (-f3) | = | 0.82 |
| (4) | f2 / f4 | = | 0.65 |

Thus, the variable magnification optical system ZL4 according to the fourth example satisfies all the conditional expressions (1) to (4).

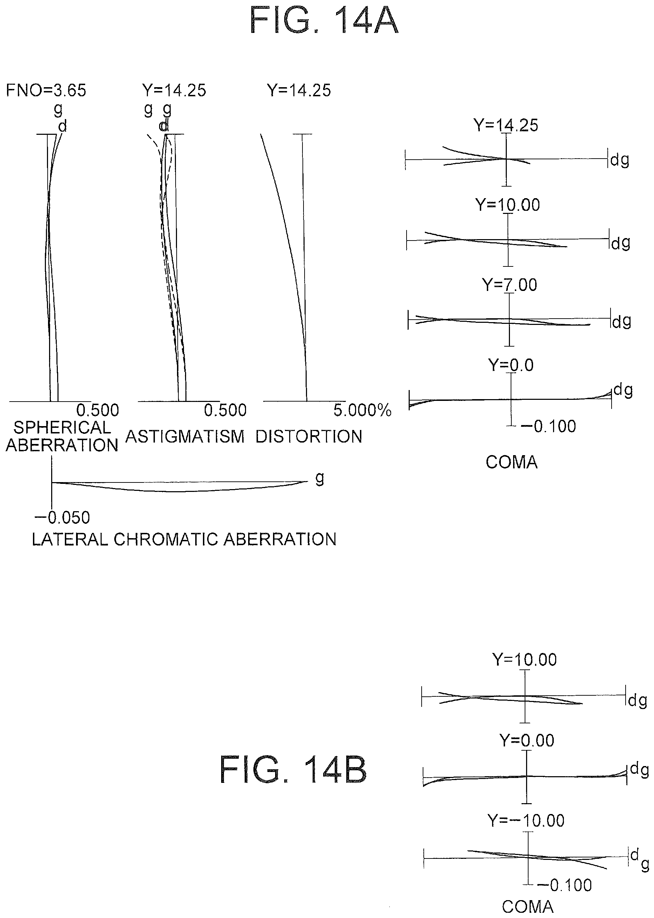

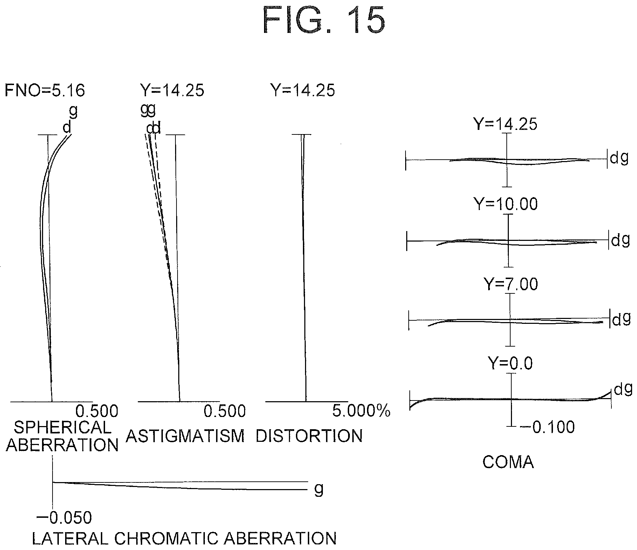

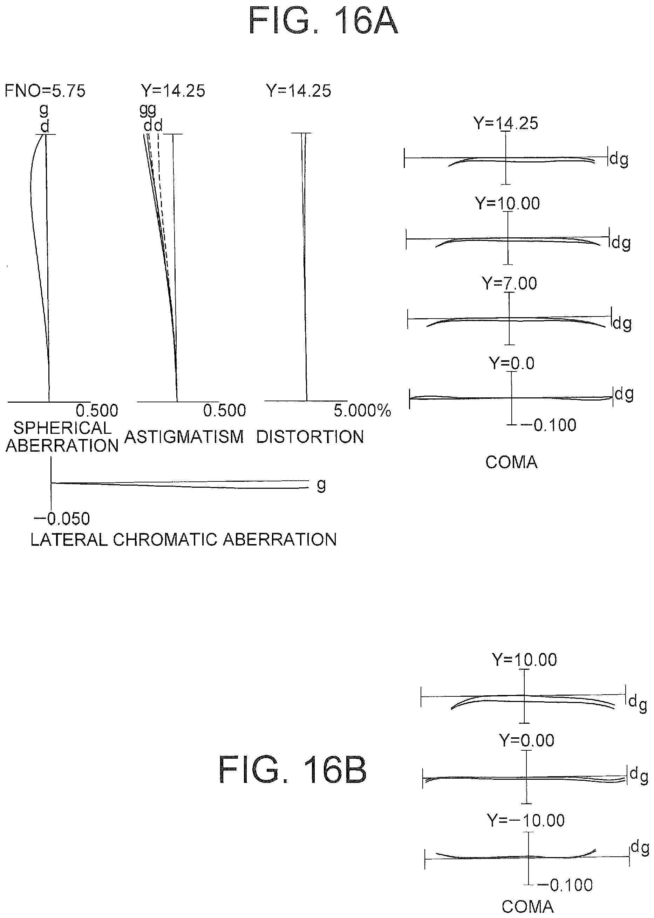

Fig.14A shows graphs of various aberrations in an infinite focusing state at the wide-angle end state in the fourth example, Fig.15 shows graphs of various aberrations in the infinite focusing state at the intermediate focal length state in the fourth example, and Fig.16A shows graphs of various aberrations in the infinite focusing state at the telephoto end state in the fourth example. Also, Fig.14B shows graphs of coma at the time of carrying out correction of an image blur (a moving amount of the vibration reduction lens group VL = 0.18) in the infinite focusing state at the wide-angle end state in the fourth example, and Fig.16B shows graphs of coma at the time of carrying out correction of an image blur (a moving amount of the vibration reduction lens group VL = 0.18) in the infinite focusing state at the telephoto end state in the fourth example. As apparent from the graphs of the various aberrations, in the fourth example, it is well understood that the various aberrations in each focal length state from the wide-angle end state to the telephoto end state are corrected excellently, and variation of the aberrations at the time of correcting a camera shake is excellent, so that excellent optical performance can be obtained.

## Claims

1. A variable magnification optical system consisting of, in order from an object side: a first lens group (G1) having negative refractive power; a second lens group (G2) having positive refractive power; a third lens group (G3) having negative refractive power; and a fourth lens group (G4) having positive refractive power; upon zooming from a wide-angle end state to a telephoto end state, a distance between the first lens group (G1) and the second lens group (G2) being varied, a distance between the second lens group (G2) and the third lens group (G3) being varied, and a distance between the third lens group (G3) and the fourth lens group (G4) being varied; and

at least one single lens of the second lens group (G2) being a vibration reduction lens group (L21) that is moved so as to have a component in a direction perpendicular to the optical axis;

wherein the first lens group (G1) includes a first negative lens L11) on the most object side, and a positive lens (L13) on the most image side, an aperture stop (S) is disposed in the neighborhood of the third lens group and is moved together with the third lens group G3 upon zooming, and

the following conditional expressions are satisfied:

$$0.35 < D3w / (-f3) < 0.45$$

$$2.10 < f1gr / (-f1gf) < 3.00$$

where D3w denotes the distance between the third lens group and the fourth lens group at the wide-angle end state, f3 denotes a focal length of the third lens group, f1gf denotes a focal length of the first negative lens, and f1gr denotes a focal length of the positive lens.

2. The variable magnification optical system according to claim 1, wherein the first lens group includes at least one negative lens between the first negative lens and the positive lens.

3. The variable magnification optical system according to claim 1, wherein the first lens group consists of, in order from the object side, a first negative lens, a second negative lens and a positive lens.

4. The variable magnification optical system according to claim 1, wherein the following conditional expression is satisfied:

$$0.81 < f2 / (-f3) < 1.00$$

where f2 denotes a focal length of the second lens group, and f3 denotes a focal length of the third lens group.

5. The variable magnification optical system according to claim 1, wherein the following conditional expression is satisfied:

$$0.60 < f2 / f4 < 0.70$$

where f2 denotes a focal length of the second lens group, and f4 denotes a focal length of the fourth lens group.

6. The variable magnification optical system according to claim 1, wherein a most object side lens of the first lens group has an aspherical surface.

7. The variable magnification optical system according to claim 1, wherein the third lens group is a cemented lens constructed by a positive lens cemented with a negative lens.

8. The variable magnification optical system according to claim 1, wherein, upon zooming from the wide-angle end state to the telephoto end state, the distance between the second lens group and the third lens group is increased, and the distance between the third lens group and the fourth lens group is decreased.

9. The variable magnification optical system according to claim 1, wherein all lenses of the second lens group, the third lens group and the fourth lens group are spherical lenses.

10. An optical apparatus equipped with the variable magnification optical system according to claim 1, wherein an image of an object is formed on a predetermined image plane.

**Patentansprüche**

1. Optisches System mit veränderlicher Vergrößerung, das aus Folgendem, der Reihe nach von einer Obj ektseite, besteht:

einer ersten Linsengruppe (G1) mit negativer Brechkraft;
einer zweiten Linsengruppe (G2) mit positiver Brechkraft;
einer dritten Linsengruppe (G3) mit negative Brechkraft; und
einer vierten Linsengruppe (G4) mit positiver Brechkraft;
wobei beim Zoomen von einem Weitwinkel-Endzustand zu einem Telefoto-Endzustand ein Abstand zwischen der ersten Linsengruppe (G1) und der zweiten Linsengruppe (G2) verändert wird, ein Abstand zwischen der zweiten Linsengruppe (G2) und der dritten Linsengruppe (G3) verändert wird und ein Abstand zwischen der dritten Linsengruppe (G3) und der vierten Linsengruppe (G4) verändert wird; und
wobei es sich bei mindestens einer Einzellinse der zweiten Linsengruppe (G2) um eine Vibrationsdämpfungs-Linsengruppe (L21) handelt, die derart bewegt wird, dass sie eine Komponente in einer zu der optischen Achse senkrechten Richtung aufweist;
wobei die erste Linsengruppe (G1) ein erste negative Linse (L11) auf der dem Objekt am nächsten liegenden Seite und eine positive (L13) auf der dem Bild am nächsten liegenden Seite umfasst,
wobei eine Aperturblende (S) in der Nähe der dritten Linsengruppe angeordnet ist und beim Zoomen zusammen mit der dritten Linsengruppe G3 bewegt wird, und
wobei die folgenden Bedingungsausdrücke erfüllt sind:

$$0{,}35 < D3w / (-f3) < 0{,}45$$

$$2{,}10 < f1gr / (-f1gf) < 3{,}00$$

wobei D3w den Abstand zwischen der dritten Linsengruppe und der vierten Linsengruppe in dem Weitwinkel-Endzustand bezeichnet, f3 die Brennweite der dritten Linsengruppe bezeichnet, f1 gf eine Brennweite der ersten negativen Linse bezeichnet und f1 gr eine Brennweite der positiven Linse bezeichnet.

2. Optisches System mit veränderlicher Vergrößerung nach Anspruch 1, wobei die erste Linsengruppe mindestens eine negative Linse zwischen der ersten negativen Linse und der positiven Linse umfasst.

3. Optisches System mit veränderlicher Vergrößerung nach Anspruch 1, wobei die erste Linsengruppe aus Folgendem, der Reihe nach von der Objektseite, besteht: einer ersten negativen Linse, einer zweiten negativen Linse und einer positiven Linse.

4. Optisches System mit veränderlicher Vergrößerung nach Anspruch 1, wobei der folgende Bedingungsausdruck erfüllt wird:

$$0,81 < f2 / (-f3) < 1,00$$

wobei f2 eine Brennweite der zweiten Linsengruppe bezeichnet und f3 eine Brennweite der dritten Linsengruppe bezeichnet.

5. Optisches System mit veränderlicher Vergrößerung nach Anspruch 1, wobei der folgende Bedingungsausdruck erfüllt wird:

$$0,60 < f2 / f4 < 0,70$$

wobei f2 eine Brennweite der zweiten Linsengruppe bezeichnet und f4 eine Brennweite der vierten Linsengruppe bezeichnet.

6. Optisches System mit veränderlicher Vergrößerung nach Anspruch 1, wobei eine der Objektseite am nächsten liegende Linse der ersten Linsengruppe eine asphärische Oberfläche aufweist.

7. Optisches System mit veränderlicher Vergrößerung nach Anspruch 1, wobei es sich bei der dritten Linsengruppe um eine geklebte Linse handelt, die aus einer mit einer negativen Linse verklebten positiven Linse aufgebaut ist.

8. Optisches System mit veränderlicher Vergrößerung nach Anspruch 1, wobei beim Zoomen von dem Weitwinkel-Endzustand zu dem Telefoto-Endzustand der Abstand zwischen der zweiten Linsengruppe und der dritten Linsengruppe vergrößert wird und der Abstand zwischen der dritten Linsengruppe und der vierten Linsengruppe verkleinert wird.

9. Optisches System mit veränderlicher Vergrößerung nach Anspruch 1, wobei es sich bei allen Linsen der zweiten Linsengruppe, der dritten Linsengruppe und der vierten Linsengruppe um sphärische Linsen handelt.

10. Optische Vorrichtung, die mit dem optischen System mit veränderlicher Vergrößerung nach Anspruch 1 ausgestattet ist, wobei ein Bild eines Objekts auf einer vorgegebenen Bildebene gebildet wird.

**Revendications**

1. Système optique à grossissement variable composé, dans l'ordre en partant d'un côté objet : d'un premier groupe de lentilles (G1) présentant une puissance de réfraction négative ; d'un deuxième groupe de lentilles (G2) présentant une puissance de réfraction positive ; d'un troisième groupe de lentilles (G3) présentant une puissance de réfraction négative ; et d'un quatrième groupe de lentilles (G4) présentant une puissance de réfraction positive ; lors d'un zoom d'un état d'extrémité de grand-angle à un état d'extrémité de téléobjectif, une distance entre le premier groupe de lentilles (G1) et le deuxième groupe de lentilles (G2) étant variée, une distance entre le deuxième groupe de lentilles (G2) et le troisième groupe de lentilles (G3) étant variée, et une distance entre le troisième groupe de lentilles (G3) et le quatrième groupe de lentilles (G4) étant variée ; et au moins une lentille unique du deuxième groupe de lentilles (G2) étant un groupe de lentilles à réduction de vibrations (L21) qui est déplacé de manière à présenter un composant dans une direction perpendiculaire à l'axe optique ; dans lequel le premier groupe de lentilles (G1) inclut une première lentille négative (L11) sur le côté le plus vers l'objet, et une lentille positive (L13) sur le côté le plus vers l'image, une butée d'ouverture (S) est disposée dans le voisinage du troisième groupe de lentilles et est déplacée conjointement avec le troisième groupe de lentilles (G3) lors du zoom, et les expressions conditionnelles suivantes sont satisfaites :

$$0,35 < D3w / (-f3) < 0,45$$

$$2,10 < f1gr / (-f1gf) < 3,00$$

où D3w désigne la distance entre le troisième groupe de lentilles et le quatrième groupe de lentilles au niveau de l'état d'extrémité de grand-angle, f3 désigne une distance focale du troisième groupe de lentilles, f1gf désigne une distance focale de la première lentille négative, et f1gr désigne une distance focale de la lentille positive.

2.  Système optique à grossissement variable selon la revendication 1, dans lequel le premier groupe de lentilles inclut au moins une lentille négative entre la première lentille négative et la lentille positive.

3.  Système optique à grossissement variable selon la revendication 1, dans lequel le premier groupe de lentilles est composé, dans l'ordre en partant du côté objet, d'une première lentille négative, d'une deuxième lentille négative et d'une lentille positive.

4.  Système optique à grossissement variable selon la revendication 1, dans lequel l'expression conditionnelle suivante est satisfaite :

$$0,81 < f2 / (-f3) < 1,00$$

où f2 désigne une distance focale du deuxième groupe de lentilles, et f3 désigne une distance focale du troisième groupe de lentilles.

5.  Système optique à grossissement variable selon la revendication 1, dans lequel l'expression conditionnelle suivante est satisfaite :

$$0,60 < f2 / f4 < 0,70$$

où f2 désigne une distance focale du deuxième groupe de lentilles, et f4 désigne une distance focale du quatrième groupe de lentilles.

6.  Système optique à grossissement variable selon la revendication 1, dans lequel une lentille du côté le plus vers l'objet du premier groupe de lentilles présente une surface asphérique.

7.  Système optique à grossissement variable selon la revendication 1, dans lequel le troisième groupe de lentilles est une lentille cimentée construite par une lentille positive cimentée avec une lentille négative.

8.  Système optique à grossissement variable selon la revendication 1, dans lequel, lors du zoom de l'état d'extrémité de grand-angle à l'état d'extrémité de téléobjectif, la distance entre le deuxième groupe de lentilles et le troisième groupe de lentilles est augmentée, et la distance entre le troisième groupe de lentilles et le quatrième groupe de lentilles est réduite.

9.  Système optique à grossissement variable selon la revendication 1, dans lequel toutes les lentilles du deuxième groupe de lentilles, du troisième groupe de lentilles et du quatrième groupe de lentilles sont des lentilles sphériques.

10. Appareil optique équipé du système optique à grossissement variable selon la revendication 1, dans lequel une image d'un objet est formée sur un plan d'image prédéterminé.

FIG. 1

# FIG. 2A

FNO=3.62   Y=14.25   Y=14.25

0.500   0.500   5.000%

SPHERICAL
ABERRATION   ASTIGMATISM   DISTORTION

−0.050

LATERAL CHROMATIC ABERRATION

Y=14.25

Y=10.00

Y=7.00

Y=0.0

−0.100

COMA

# FIG. 2B

Y=10.00

Y=0.00

Y=−10.00

−0.100

COMA

# FIG. 3

FNO=5.14    Y=14.25    Y=14.25

0.500
SPHERICAL
ABERRATION   ASTIGMATISM   DISTORTION

0.500    5.000%

−0.050
LATERAL CHROMATIC ABERRATION

Y=14.25
Y=10.00
Y=7.00
Y=0.0
−0.100
COMA

# FIG. 4A

FNO=5.72

SPHERICAL ABERRATION
0.500

Y=14.25

ASTIGMATISM
0.500

Y=14.25

DISTORTION
5.000%

LATERAL CHROMATIC ABERRATION
−0.050

Y=14.25
Y=10.00
Y=7.00
Y=0.0
−0.100

COMA

# FIG. 4B

Y=10.00
Y=0.00
Y=−10.00
−0.100

COMA

# FIG. 5

EP 2 891 914 B1

# FIG. 6A

FNO=3.63    Y=8.19    Y=8.19

0.500    0.500    5.000%

SPHERICAL
ABERRATION    ASTIGMATISM    DISTORTION

Y=8.19

dg

Y=5.58

dg

Y=3.98

dg

Y=0.0

dg

−0.100

COMA

−0.050

LATERAL CHROMATIC ABERRATION

# FIG. 6B

Y=5.58

dg

Y=0.00

dg

Y=−5.58

dg

−0.100

COMA

# FIG. 7

FNO=5.13  Y=8.19  Y=8.19

0.500  0.500  5.000%
SPHERICAL ABERRATION  ASTIGMATISM  DISTORTION

g

−0.050
LATERAL CHROMATIC ABERRATION

Y=8.19

dg

Y=5.58

dg

Y=3.98

dg

Y=0.0

dg

−0.100

COMA

# FIG. 8A

FNO=5.67    Y=8.19    Y=8.19

SPHERICAL
ABERRATION    ASTIGMATISM    DISTORTION

0.500    0.500    5.000%

LATERAL CHROMATIC ABERRATION

−0.050

g

Y=8.19
dg

Y=5.58
dg

Y=3.98
dg

Y=0.0
dg

−0.100

COMA

# FIG. 8B

Y=5.58
dg

Y=0.00
dg

Y=−5.58
dg

−0.100

COMA

FIG. 9

# FIG. 10A

FNO=3.63

SPHERICAL ABERRATION    0.500

Y=14.25

ASTIGMATISM    0.500

Y=14.25

DISTORTION    5.000%

Y=14.25    dg

Y=10.00    dg

Y=7.00    dg

Y=0.0    dg

−0.100

COMA

−0.050

LATERAL CHROMATIC ABERRATION    g

# FIG. 10B

Y=10.00    dg

Y=0.00    dg

Y=−10.00    dg

−0.100

COMA

# FIG. 11

FNO=5.24     Y=14.25     Y=14.25

0.500
SPHERICAL
ABERRATION   ASTIGMATISM   DISTORTION

0.500      5.000%

Y=14.25

Y=10.00

Y=7.00

Y=0.0

−0.100

COMA

−0.050
LATERAL CHROMATIC ABERRATION

# FIG. 12A

FNO=5.87          Y=14.25          Y=14.25

SPHERICAL
ABERRATION    ASTIGMATISM   DISTORTION

0.500            0.500            5.000%

Y=14.25

Y=10.00

Y=7.00

Y=0.0

−0.100

COMA

−0.050
LATERAL CHROMATIC ABERRATION

g

Y=10.00

FIG. 12B

Y=0.00

Y=−10.00

−0.100

COMA

FIG. 13

# FIG. 14A

FNO=3.65

Y=14.25

Y=14.25

0.500
SPHERICAL
ABERRATION

0.500
ASTIGMATISM

5.000%
DISTORTION

Y=14.25

dg

Y=10.00

dg

Y=7.00

dg

Y=0.0

dg

−0.100

COMA

g

−0.050
LATERAL CHROMATIC ABERRATION

Y=10.00

dg

# FIG. 14B

Y=0.00

dg

Y=−10.00

dg

−0.100

COMA

FIG. 15

# FIG. 16A

FNO=5.75   Y=14.25   Y=14.25

g
d

gg
dd

0.500
SPHERICAL
ABERRATION

0.500
ASTIGMATISM

5.000%
DISTORTION

Y=14.25

dg

Y=10.00

dg

Y=7.00

dg

Y=0.0

dg

−0.100

COMA

−0.050
LATERAL CHROMATIC ABERRATION

g

Y=10.00

dg

Y=0.00

dg

# FIG. 16B

Y=−10.00

dg

−0.100

COMA

# FIG. 17

# FIG. 18

```
                    ( START )
                        │
                        ▼
┌─────────────────────────────────────────┐
│   DISPOSING 1ST LENS GROUP G1, A 2ND LENS │──── S11
│   GROUP G2, A 3RD LENS GROUP G3, AND A    │
│          4TH LENS GROUP G4.               │
└─────────────────────────────────────────┘
                        │
                        ▼
┌─────────────────────────────────────────┐
│   DISPOSING SUCH THAT, UPON ZOOMING       │──── S12
│   FROM A WIDE-ANGLE END STATE TO A        │
│   TELEPHOTO END STATE, A DISTANCE         │
│   BETWEEN THE 1ST LENS GROUP G1 AND THE   │
│   2ND LENS GROUP G2 IS VARIED, A DISTANCE │
│   BETWEEN THE SECOND  LENS                │
│   GROUP G2 AND THE THIRD LENS             │
│   GROUP G3 IS VARIED, AND A DISTANCE      │
│   BETWEEN THE THIRD LENS GROUP G3 AND THE │
│   FOURTH LENS GROUP G4 IS VARIED          │
└─────────────────────────────────────────┘
                        │
                        ▼
┌─────────────────────────────────────────┐
│   DISPOSING AT LEAST ONE SINGLE           │──── S13
│   LENS OF THE SECOND LENS GROUP G2 AS A   │
│   VIBRATION REDUCTION LENS GROUP VL       │
│   THAT IS MOVED SO AS TO HAVE A           │
│   COMPONENT IN A DIRECTION                │
│   PERPENDICULAR TO THE OPTICAL AXIS.      │
└─────────────────────────────────────────┘
                        │
                        ▼
┌─────────────────────────────────────────┐
│   DISPOSING THE THIRD LENS                │──── S14
│   GROUP G3 AND THE FOURTH LENS GROUP G4   │
│   SO AS TO SATISFY A PREDETERMINED        │
│          CONDISION.                       │
└─────────────────────────────────────────┘
                        │
                        ▼
                    ( END )
```

# FIG. 19

START

DISPOSING A FIRST LENS GROUP G1, A SECOND LENS GROUP G2, A THIRD LENS GROUP G3, AND A FOURTH LENS GROUP G4. — S21

DISPOSING SUCH THAT, UPON ZOOMING FROM A WIDE-ANGLE END STATE TO A TELEPHOTO END STATE, A DISTANCE BETWEEN THE FIRST LENS GROUP G1 AND THE SECOND LENS GROUP G2 IS VARIED, A DISTANCE BETWEEN THE SECOND LENS GROUP G2 AND THE THIRD LENS GROUP G3 IS VARIED AND A DITANCE BETWEEN THE THIRD LENS GROUP G3 AND THE FOURTH LENS GROUP G4 IS VARIED. — S22

DISPOSING AT LEAST ONE SINGLE LENS OF THE SECOND LENS GROUP G2 AS A VIBRATION REDUCTION LENS GROUP VL THAT IS MOVED SO AS TO HAVE A COMPONENT IN A DIRECTION PERPENDICULAR TO THE OPTICAL AXIS. — S23

DISPOSING THE FIRST LENS GROUP G1 SO AS TO INCLUDE A FIRST NEGATIVE LENS ON THE MOST OBJECT SIDE, AND A POSITIVE LENS ON THE MOST IMAGE SIDE, AND SATISFY A PREDETERMINED CONDITION. — S24

END

# FIG. 20

```
┌─────────────────┐
│      START      │
└─────────────────┘
         │
         ▼
┌──────────────────────────────────┐
│  DISPOSING A FIRST LENS GROUP G1, A      │── S31
│  SECOND LENS GROUP G2, A THIRD LENS      │
│  GROUP G3, AND A FOURTH LENS GROUP G4.   │
└──────────────────────────────────┘
         │
         ▼
┌──────────────────────────────────┐
│  DISPOSING SUCH THAT, UPON ZOOMING       │── S32
│  FROM A WIDE-ANGLE END STATE TO A        │
│  TELEPHOTO END STATE, A DISTANCE         │
│  BETWEEN THE FIRST LENS GROUP G1 AND     │
│  THE SECOND LENS GROUP G2 IS VARIED,     │
│  A DISTANCE BETWEEN THE SECOND           │
│  LENS GROUP G2 AND THE THIRD LENS        │
│  GROUP G3 IS VARIED, AND A DITANCE       │
│  BETWEEN THE THIRD LENS GROUP G3 AND     │
│  THE FOURTH LENS GROUP G4 IS VARIED.     │
└──────────────────────────────────┘
         │
         ▼
┌──────────────────────────────────┐
│  DISPOSING AT LEAST ONE SINGLE           │── S33
│  LENS OF THE SECOND LENS GROUP G2        │
│  AS A VIBRATION REDUCTION LENS GROUP VL  │
│  THAT IS MOVED SO AS TO HAVE A           │
│  COMPONENT IN A DIRECTION                │
│  PERPENDICULAR TO THE OPTICAL AXIS.      │
└──────────────────────────────────┘
         │
         ▼
┌──────────────────────────────────┐
│  DISPOSING THE SECOND LENS GROUP G2 AND  │── S34
│  THE THIRD LENS GROUP G3 SO AS TO        │
│  SATISFY A PREDETERMINED CONDISION.      │
└──────────────────────────────────┘
         │
         ▼
┌─────────────────┐
│       END       │
└─────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11174329 B
- JP 2012141600 A
- US 2012162779 A1
- US 2012162777 A1
- US 2007223105 A1